(19) Europäisches Patentamt

European Patent Office

Office européen des brevets

(11) **EP 1 332 397 B1**

(12) **FASCICULE DE BREVET EUROPEEN**

(45) Date de publication et mention
de la délivrance du brevet:
**27.09.2006 Bulletin 2006/39**

(21) Numéro de dépôt: **01992908.2**

(22) Date de dépôt: **02.11.2001**

(51) Int Cl.:
***G02B 21/00*** *(2006.01)*

(86) Numéro de dépôt international:
**PCT/FR2001/003394**

(87) Numéro de publication internationale:
**WO 2002/037157 (10.05.2002 Gazette 2002/19)**

(54) **MICROSCOPE POUR OBJETS DIFFRACTANTS**

MIKROSKOP FÜR BEUGUNGSOBJEKTE

MICROSCOPE FOR DIFFRACTING OBJECTS

(84) Etats contractants désignés:
**AT BE CH CY DE DK ES FI FR GB GR IE IT LI LU
MC NL PT SE TR**

(30) Priorité: **06.11.2000 FR 0014160
13.02.2001 FR 0101908
09.03.2001 FR 0103215
22.03.2001 FR 0103861**

(43) Date de publication de la demande:
**06.08.2003 Bulletin 2003/32**

(73) Titulaire: **Lauer, Vincent
94130 Nogent sur Marne (FR)**

(72) Inventeur: **Lauer, Vincent
94130 Nogent sur Marne (FR)**

(56) Documents cités:
**US-A- 4 953 188        US-A- 5 241 364
US-A- 5 386 112**

**Description**

L'invention concerne un microscope pour l'observation d'objets diffractants.

Des images de résolution élevée, de profondeur de champ très faible ou très élevée, peuvent être obtenues au moyen du microscope décrit dans "Observation of biological objects using an optical diffraction tomographic microscope", par Vincent Lauer, proceedings of SPIE vol.4164 p.122-133, ainsi que dans le brevet WO99/53355

Toutefois l'appareil décrit dans cette publication permet difficilement l'imagerie en temps réel.

Dans un microscope fonctionnant en transmission et dans lequel l'onde d'éclairage n'est pas focalisée en un point particulier de l'objet observé, il est utile de pouvoir modifier indépendamment la partie diffractée de l'onde d'éclairage et la partie non diffractée de cette onde. Le microscope à contraste de phase, par exemple, est basé sur ce principe. Toutefois, dans un microscope à contraste de phase, le décalage de phase appliqué au moyen d'un anneau de phase affecte la partie non diffractée de l'onde, mais également une partie non négligeable de l'onde diffractée. Il s'ensuit des perturbations importantes de l'image, par exemple le phénomène de halo ou le fait que la profondeur de champ est mal définie et supérieure à ce qu'elle est en fond clair, la qualité d'image en général étant très inférieure à celle obtenue au moyen du microscope décrit dans proceedings of SPIE vol.4164 p.122-133.

En fond clair, l'image formée par un microscope classique a par ailleurs une résolution effective qui est inférieure de moitié au maximum théorique atteint par exemple dans proceedings of SPIE vol.4164 p.122-133.

L'objet de la présente invention est un microscope dont les performances en termes de résolution et de profondeur de champ sont similaires à celles de celui décrit dans proceedings of SPIE vol.4164 p. 122-133, mais qui permet l'obtention d'images en temps réel et en couleurs, pour un coût acceptable, pouvant être observée soit à l'aide d'une caméra soit à l'aide d'un oculaire.

L'invention consiste en un microscope fonctionnant en transmission, comprenant :

- un système optique comprenant une source d'éclairage et un condenseur et adapté pour éclairer un objet observé à l'aide d'un faisceau lumineux parallèle,
- un déflecteur du faisceau d'illumination adapté pour faire varier la direction du faisceau lumineux dans l'objet observé,
- un objectif de microscope collectant le faisceau lumineux après qu'il ait traversé l'objet observé,
- au moins une lentille pour focaliser, en un premier point de focalisation d'un premier plan de focalisation, la partie non diffractée par l'objet observé du faisceau lumineux ayant traversé l'objet observé et l'objectif de microscope,

caractérisé par le fait qu'il comporte :

- un premier dispositif de filtrage placé dans le premier plan de focalisation, pour appliquer une différence de phase et/ou d'atténuation et/ou de polarisation dans le premier plan de focalisation, entre d'une part la partie non diffractée du faisceau lumineux qui traverse le premier point de focalisation, et d'autre part la partie diffractée du faisceau lumineux qui ne traverse pas le premier point de focalisation,
- au moins un premier miroir mobile placé sur la trajectoire du faisceau lumineux ayant traversé l'objet observé, entre l'objectif et le premier dispositif de filtrage, pour modifier la direction du faisceau lumineux, pour que la direction du faisceau lumineux, après réflexion sur le premier miroir mobile, soit indépendante de la direction du faisceau lumineux dans l'objet observé, et pour que le premier point de focalisation soit fixe.

Un tel appareil, du fait que la partie non diffractée du faisceau lumineux parvient en un point fixe du premier dispositif de filtrage, permet d'effectuer sur ce faisceau diverses opérations de filtrage qui seraient impossibles dans un plan ou ce faisceau parvient en un point mobile.

Selon une caractéristique de l'invention, le déflecteur de faisceau est de préférence constitué par au moins un second miroir mobile, solidaire dudit premier miroir mobile ou confondu avec ledit premier miroir mobile. En effet cette solution évite d'avoir à synchroniser le déflecteur de faisceau et le premier miroir mobile, et simplifie donc considérablement le système.

Selon une caractéristique de l'invention, le dispositif de filtrage est placé dans un plan conjugué au plan focal image de l'objectif de microscope. En effet cette c'est dans ce plan que focalise le faisceau lumineux qui est parallèle dans l'objet observé. Son point de focalisation dans ce plan, moyennant une correction appropriée des aberrations, peut avoir une largeur limitée par la diffraction.

Le dispositif de filtrage est utilisé pour améliorer ou modifier l'image de diverses manières.

Selon une caractéristique de l'invention, le premier dis positif de filtrage comprend un moyen pour appliquer un décalage de phase entre, d'une part, la partie du faisceau lumineux qui traverse un point central coïncidant avec le premier point de focalisation, et d'autre part, la partie du faisceau lumineux qui ne traverse pas le point central. Ceci permet par exemple de générer une image en contraste de phase, ou de générer plusieurs images affectées par des décalages de phase différents entre la partie non diffractée du faisceau lumineux, et la partie diffractée du faisceau lumineux. Par exemple, le décalage de phase peut être généré au moyen d'une surépaisseur réalisée sur une vitre en verre. Selon une autre caractéristique de l'invention, le premier dispositif de filtrage comprend un moyen pour atténuer la partie du faisceau qui traverse un point central coïncidant avec le premier point de focalisation. Ceci permet d'augmenter le contraste de l'image. Par exemple, le moyen pour atténuer peut être constitué par un élément absorbant inclus dans le premier dispositif de filtrage.

Selon une autre caractéristique de l'invention, le faisceau lumineux parvenant au premier dispositif de filtrage est polarisé, et le premier dispositif de filtrage comprend:

- un moyen pour polariser différemment l'onde traversant, d'une part, un point central coïncidant avec le premier point de focalisation, et d'autre part le reste du dispositif du filtrage, pour que la polarisation de la partie du faisceau lumineux qui a traversé le point central diffère de la polarisation de la partie du faisceau lumineux qui a traversé le reste du dispositif de filtrage
- au moins un polariseur traversé par le faisceau ayant traversé le premier dispositif de filtrage, pour faire interférer la partie du faisceau lumineux qui a traversé le point central avec la partie du faisceau lumineux qui a traversé le reste du dispositif de filtrage.

Cette solution permet de réaliser un contraste variable, en fonction par exemple de l'orientation du polariseur. Selon une caractéristique de l'invention complémentaire de la précédente, le microscope comprend au moins une lame retardatrice placée sur la trajectoire du faisceau lumineux entre le premier dispositif de filtrage et le polariseur, pour modifier l'écart de phase entre le faisceau ayant traversé le point central et le faisceau ayant traversé le reste du dispositif de filtrage. Cette lame retardatrice permet d'obtenir par exemple un contraste de phase modulable. Si plusieurs lames sont présentes, elle peut permettre également d'obtenir plusieurs images différant entre elles par la différence de phase entre la partie non diffractée du faisceau, et la partie diffractée du faisceau.

Le premier dispositif de filtrage peut également être utilisé pour améliorer l'image de diverses autres manières. Par exemple, et selon une caractéristique de l'invention, la transmissivité du premier dispositif de filtrage dépend de la distance à l'axe optique, et est une fonction croissante de la distance à l'axe optique. Ceci permet d'améliorer la résolution.

Un défaut des microscopes usuels est que l'image produite ne dépend pas linéairement des caractéristiques de l'objet observé, sauf si le contraste est particulièrement faible. Selon l'invention, et afin de résoudre ce problème, le microscope comprend:

- au moins trois capteurs sur lesquels interfèrent, d'une part, la partie du faisceau lumineux qui a été diffractée par l'objet observé, et d'autre part la partie du faisceau lumineux qui n'a pas été diffractée par l'objet observé,
- des moyens pour appliquer un premier décalage de phase entre, d'une part, la partie du faisceau lumineux qui a été diffractée par l'objet observé et qui parvient à un premier capteur, et, d'autre part, la partie du faisceau lumineux qui n'a pas été diffractée par l'objet observé et qui parvient à ce premier capteur,
- des moyens pour appliquer un second décalage de phase, différent du premier décalage de phase, entre d'une part, la partie du faisceau lumineux qui a été diffractée par l'objet observé et qui parvient à un premier capteur, et, d'autre part, la partie du faisceau lumineux qui n'a pas été diffractée par l'objet observé et qui parvient à ce premier capteur.

Ceci permet de produire au moins trois figures d'interférence permettant le calcul d'une image complexe dépendant linéairement des caractéristiques de l'objet observé.

En l'absence de précautions particulière, la partie non diffractée du faisceau, après réflexion sur le premier miroir mobile, a une direction fixe et est particulièrement intense. Si l'observation se fait directement à l'aide d'oculaires, la présence d'un faisceau laser intense de direction constante est dangereuse pour l'oeil.

De plus, afin que le premier miroir mobile ne cause pas un déplacement du plan image, il doit être placé exactement dans ce plan. Ceci complique le système optique et le rend particulièrement sensible aux erreurs de position du miroir mobile ainsi qu'aux problèmes de speckle.

Selon une caractéristique de l'invention, ces problèmes sont résolus au moyen d'un troisième miroir mobile permettant de modifier la direction du faisceau lumineux après qu'il ait été réfléchi sur le premier miroir mobile. De préférence, ce troisième miroir mobile est solidaire du premier miroir mobile ou est confondu avec le premier miroir mobile. Il permet de faire varier la direction du faisceau en sortie du dispositif, et de compenser le déplacement du plan image produit par le premier miroir mobile. Afin que cette compensation soit effective, il est toutefois nécessaire que le microscope comprenne des moyens optiques pour qu'une image de l'objet observé, après réflexion par le premier miroir mobile et le troisième miroir mobile, soit fixe. Le troisième miroir mobile peut être par exemple une face opposée du premier miroir mobile. Les moyens optiques pour qu'une image de l'objet observé, après réflexion par le premier miroir mobile et le troisième miroir mobile, soit fixe, sont par exemple constitués, selon une version de l'invention, par :

- deux lentilles ou groupes de lentilles, séparées par un plan de focalisation du faisceau lumineux,
- un nombre impair de miroirs fixes déviant le faisceau dans un premier plan de déviation, et un nombre impair de miroirs fixes déviant le faisceau dans des plans de déviation orthogonaux au premier plan de déviation.

L'utilisation du premier dispositif de filtrage permet de modifier le contraste et d'améliorer la résolution et la qualité de l'image, mais ne permet pas par exemple d'améliorer la profondeur de champ. Selon une caractéristique de l'invention, les caractéristiques de l'image peuvent être modifiées ou améliorées au moyen d'un second dispositif de filtrage

- placé dans un second plan de focalisation du faisceau lumineux, atteint par ledit faisceau lumineux après traversée de l'objectif de microscope et avant réflexion par ledit premier miroir mobile,
- permettant appliquer une modification de phase et/ou d'atténuation et/ou de polarisation variable dans le second plan de focalisation,

En particulier, et selon une caractéristique de l'invention, la profondeur de champ de l'image peut être augmentée si le second dispositif de filtrage laisse passer la lumière atteignant une bande elliptique et arrête la lumière n'atteignant pas cette bande elliptique. Selon une autre caractéristique de l'invention, le second dispositif de filtrage comporte des moyens pour laisser passer alternativement la lumière atteignant l'une ou l'autre de deux bandes elliptiques distinctes. Les deux images produites alternativement constituent chacune une projection suivant une direction différente, et l'ensemble de ces deux images permet une vue stéréoscopique.

D'autres caractéristiques et avantages de l'invention apparaîtront au cours de la description qui va suivre de plusieurs de ses formes de réalisation, données à titre d'exemples non limitatifs, en regard des dessins joints.

Sur les dessins :

- La Figure 1 est un schéma d'ensemble d'un premier mode de réalisation.
- La Figure 2 est un schéma d'une lame demi onde percée utilisée dans ce mode de réalisation.
- La Figure 3 représente la trajectoire du point d'impact de l'onde d'éclairage dans un plan conjugué au plan focal image de l'objectif, pendant le temps d'intégration des capteurs, pour l'obtention d'une coupe de l'objet observé à l'aide de ce microscope.
- La Figure 4 représente en coupe la représentation fréquentielle bidimensionnelle obtenue par transformation de Fourier de l'image obtenue pour une onde d'éclairage plane donnée, ainsi que la partie de la représentation fréquentielle tridimensionnelle de l'objet observé dont elle est la projection.
- La Figure 5 représente un système d'éclairage pouvant remplacer le laser.
- La Figure 6 représente un système de détection à une caméra pouvant remplacer le système de détection à trois caméras décrit sur la figure 1.
- La Figure 7 représente un masque elliptique utilisé pour obtenir une projection de l'objet observé.
- La Figure 8 représente un système de détection sans lames d'onde pouvant remplacer le système de détection décrit sur la figure 1.
- La Figure 9 représente un système de détection à une caméra placée dans un plan conjugué au plan focal image de l'objectif.
- La Figure 10 sert de support au calcul des caractéristiques de bandes elliptiques utilisées sur le masque de la Figure 7.
- La Figure 11 représente le masque de la Figure 7 à l'échelle et pour un cas particulier de réalisation.
- La Figure 12 représente une lame filtrante permettant d'atténuer la partie non diffractée de l'onde dans le cas ou le masque de la Figure 7 est utilisé.
- La Figure 13 représente une lame générant un décalage de phase de la partie non diffractée de l'onde d'éclairage.
- La Figure 14 représente un système de détection à une caméra dans lequel l'image acquise peut être directement affichée sur un écran.
- La Figure 15 représente un dispositif d'observation directe à l'aide d'un oculaire.
- La Figure 16 représente une vue de coté d'un ensemble de trois miroirs également représentés sur la figure 17.
- La figure 17 représente un mode de réalisation amélioré, plus particulièrement adapté à l'observation directe par des oculaires.
- La figure 18 représente les électrodes d'un rotateur de polarisation utilisé pour l'observation stéréoscopique.
- La figure 19 représente la réponse fréquentielle d'un microscope en fond clair.

Dans le texte qui suit le terme « lentille » pourra désigner indifféremment une lentille simple ou composée, en général étudiée pour minimiser les aberrations.

Les systèmes optiques peuvent être réalisés de diverses manières. Pour faciliter la conception du système et la compréhension des schémas, on utilisera une alternance de plans d'espace, désignés par la lettre (E) sur les schémas, et de plans de fréquence, désignés par la lettre (F) sur les schémas. Un plan d'espace sera défini comme un plan image tel qu'une onde plane dans l'objet observé soit plane dans le plan d'espace. Un plan de fréquence sera défini comme un plan conjugué au plan focal image de l'objectif de microscope, tel qu'une onde centrée sur un point d'un plan image soit plane dans le plan de fréquence. Un plan image est un plan dans lequel un point de l'objet observé, sur lequel l'objectif et le condenseur sont focalisés, a une image ponctuelle. Un faisceau qui est parallèle à la traversée de l'objet observé est focalisé en un point du plan focal image de l'objectif et de chaque plan de fréquence.

Les alternances de plans d'espace (E) et de fréquence (F) utilisées dans la description ne constituent pas une limitation de l'invention et un système fonctionnel peut être réalisé qui ne comprenne pas de tels plans. L'alternance de plans d'espace et de fréquence est seulement un mode de réalisation particulièrement simple de l'invention.

## Premier mode de réalisation:

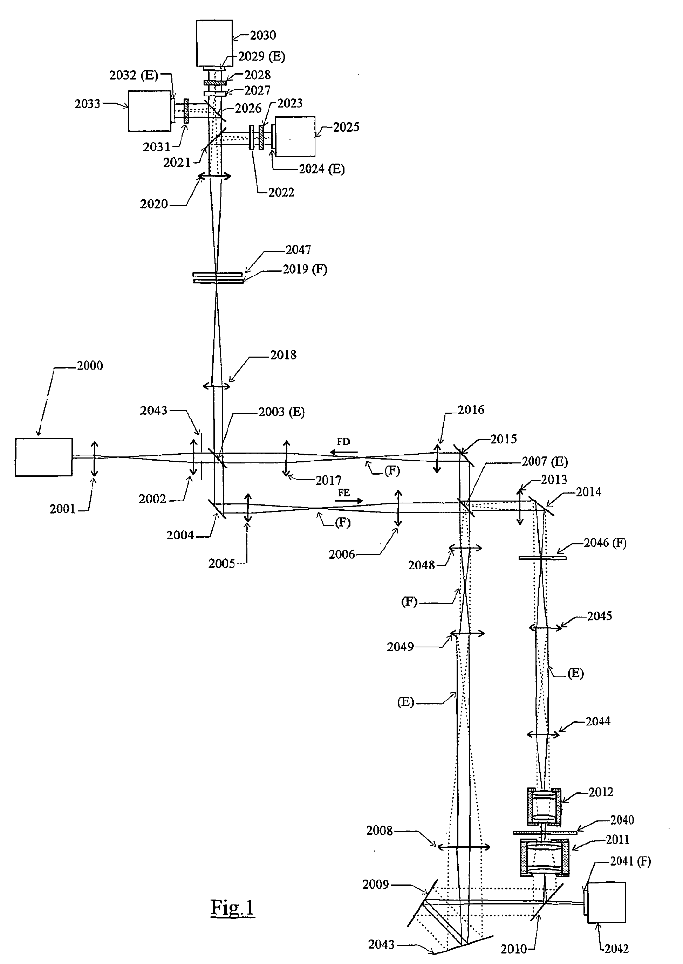

La Figure 1 est un schéma d'ensemble du premier mode de réalisation. Le trajet d'un faisceau parallèle à la traversée de l'objet observé, est en traits pleins. Le trajet d'un faisceau issu d'un point de l'objet observé est représenté en pointillé sur certaines parties de la figure.

Un faisceau lumineux issu du laser 2000 polarisé orthogonalement au plan de la figure est élargi par un élargisseur de faisceau constitué des lentilles 2001 et 2002. Il traverse le diaphragme de champ 2043. Il parvient alors au miroir galvanométrique 2003 qui le réfléchit vers le miroir fixe 2004. Le miroir galvanométrique 2003 est mobile en rotation autour d'un axe passant par son centre et orienté orthogonalement au plan de la figure. Après réflexion sur 2004 le faisceau traverse la lentille 2005 dont le point focal objet est au centre du miroir galvanométrique 2003. Il traverse la lentille 2006 dont le plan focal objet est confondu avec le plan focal image de 2005. Il est réfléchi par le miroir galvanométrique 2007 dont le centre est au point focal image de la lentille 2006. Le miroir galvanométrique 2007 est mobile en rotation autour d'un axe passant par son centre et situé dans le plan de la figure. Sur cette partie du trajet du faisceau lumineux, les miroirs galvanométriques 2003 et 2007 ont la fonction d'un déflecteur de faisceau permettant de faire varier la direction du faisceau lumineux dans l'objet observé. Le faisceau provenant du miroir 2007 traverse ensuite la lentille 2048 dont le point focal objet est au centre du miroir galvanométrique 2007. Il traverse ensuite la lentille 2049 dont le plan focal objet est confondu avec le plan focal image de la lentille 2048. Il traverse la lentille 2008 dont le plan focal objet est confondu avec le plan focal image de la lentille 2049. Il est réfléchi par le miroir 2043 puis par le miroir 2009 et par le miroir partiellement transparent 2010. Il traverse alors le condenseur 2011. Le plan focal image de la lentille 2008 est dans le plan focal objet du condenseur 2011 de sorte qu'en sortie du condenseur le faisceau est parallèle. Le faisceau traverse alors l'objet observé 2040 qui le diffracte. Après traversée de l'objet observé, le faisceau lumineux comprend:

- une partie non diffractée, constituée par la partie du faisceau lumineux qui est parallèle et de même direction qu'avant traversée de l'objet observé,
- une partie diffractée, constituée par le reste du faisceau lumineux, qui a été diffracté par l'objet observé dans un ensemble de directions différentes de la direction du faisceau avant traversée de l'objet observé.

L'ensemble du faisceau lumineux, comprenant une partie diffractée et une partie non diffractée, traverse alors l'objectif 2012. Le faisceau traverse ensuite la lentille de tube 2044 dont le plan focal objet est confondu avec le plan focal image de l'objectif. Il traverse ensuite une lentille 2045 dont le plan focal objet est confondu avec le plan focal image de la lentille 2044. Le plan focal image de la lentille 2045 constitue le second plan de focalisation, et le second dispositif de filtrage est placé dans ce plan. Le second dispositif de filtrage est constitué par le masque optionnel 2046. Le faisceau traverse donc le masque optionnel 2046 placé dans le plan focal image de la lentille 2045. Il est réfléchi par le miroir 2014 et traverse la lentille 2013 dont le plan focal objet est sur le masque optionnel 2046. Il est réfléchi par le miroir galvanométrique 2007 dont le centre est confondu avec le point focal objet de la lentille 2013. Il est ensuite réfléchi par le miroir 2015 puis traverse la lentille 2016 dont le point focal objet est au centre du miroir galvanométrique 2007. Il traverse la lentille 2017 dont le plan focal objet est confondu avec le plan focal image de la lentille 2016. Il est réfléchi par le miroir galvanométrique 2003 dont le centre est confondu avec le point focal objet de la lentille 2017. Sur cette partie de la trajectoire du faisceau lumineux, les miroirs galvanométriques 2003 et 2007 ont pour fonction de modifier la direction du faisceau lumineux provenant de l'objet observé de manière à compenser ses variations de direction. Après réflexion sur les miroirs 2003 et 2007, la partie non diffractée du faisceau lumineux a une direction fixe, indépendamment de la direction du faisceau lumineux dans l'objet observé. Le faisceau provenant du miroir galvanométrique 2003 traverse la lentille 2018 dont le point focal objet est au centre du miroir galvanométrique 2003, et qui a pour fonction de focaliser, en un point de focalisation du premier plan de focalisation constitué par le plan focal image de la lentille 2018, la partie de l'onde qui n'a pas été diffractée par l'objet observé. Il traverse le premier dispositif de filtrage placé dans le premier plan de focalisation, et comportant la lame demi-onde percée 2019 et la lame filtrante optionnelle 2047. Les axes neutres de cette lame demi onde sont orientés à 45 degrés du plan de la figure de manière à ce que la partie du faisceau qui a traversé la lame demi onde soit polarisée dans le plan de la figure, la partie du faisceau qui a traversé le trou pratiqué dans cette lame étant polarisée dans le sens orthogonal au plan de la figure. Le faisceau traverse ensuite une lame filtrante optionnelle 2047 faisant également partie du dispositif de filtrage. Le faisceau traverse la lentille 2020 dont le plan focal objet est sur la lame demi onde percée 2019. Il parvient alors au séparateur de faisceau 2021 qui réfléchit le tiers de la puissance lumineuse. Il parvient alors au séparateur de faisceau 2026 qui réfléchit la moitié de la puissance lumineuse.

La partie du faisceau qui a été réfléchie par le séparateur de faisceau 2021 traverse ensuite la lame tiers d'onde 2022 et le polariseur 2023 puis parvient au capteur CCD 2024 lié à la caméra 2025 et situé dans un plan focal image de la lentille 2020. Un axe neutre de la lame tiers d'onde 2022 est dans le plan de la figure, de sorte que cette lame induit un décalage de phase de 120 degrés entre la partie du faisceau qui a traversé la lame demi-onde 2019 et la partie du faisceau qui a traversé le trou pratiqué dans cette lame. Le polariseur est typiquement à 45 degrés du plan de la figure, toutefois des angles différents peuvent être utilisés.

L'ensemble 2027, 2028, 2029, 2030 est équivalent à l'ensemble 2022, 2023, 2024, 2025 mais la lame tiers d'onde est tournée de 90 degrés de manière à générer un décalage de phase de -120 degrés.

L'ensemble 2031, 2032, 2033 est équivalent à l'ensemble 2022, 2023, 2024, 2025 mais la lame tiers d'onde est supprimée.

La partie du faisceau qui traverse le miroir partiellement transparent 2010 parvient au capteur CCD 2041 monté sur la caméra 2042 et placé dans un plan de fréquence, sur lequel la partie non diffractée du faisceau a une image ponctuelle.

Le condenseur et l'objectif sont tous deux achromatiques/aplanétiques. On note $F_{obj}$ la distance focale de l'objectif et on note $F_{cond}$ la distance focale du condenseur. On note $F_x$ la distance focale de la lentille numéro $X$. Afin que les déviations du faisceau d'éclairage et du faisceau ayant traversé l'objet observé, par les miroirs galvanométriques, se compensent exactement, l'égalité suivante doit être respectée:

$$\frac{F_{2008}}{F_{cond}} \frac{F_{2048}}{F_{2049}} = \frac{F_{2013}}{F_{2045}} \frac{F_{2044}}{F_{obj}}$$

La lentille 2016 et la lentille 2006 sont identiques entre elles, et les lentilles 2005 et 2017 sont également identiques entre elles. Le grossissement de l'ensemble vaut $g = \dfrac{F_{2020}}{F_{2018}} \dfrac{F_{2017}}{F_{2016}} \dfrac{F_{2013}}{F_{2045}} \dfrac{F_{2044}}{F_{obj}}$.

Par exemple, on peut utiliser:

- un objectif planachromatique Nikon CFI60 d'ouverture numérique 1,25 formant l'image à l'infini et corrigé indépendamment de la lentille de tube, de distance focale 2 mm.
- un condenseur Nikon planachromatique, de distance focale 8 mm.
- une lentille 2008 constituée d'un doublet achromatique optimisé Melles Griot, de distance focale 800 mm.
- des lentilles 2044, 2045, 2013, 2016, 2017, 2006, 2005, 2018, 2020, 2048, 2049, 2008 toutes identiques à la lentille de tube utilisée sur les microscopes Nikon, de distance focale 200 mm.
- un laser HeNe rouge 2000 à 633 nm de longueur d'onde.
- des lentilles 2001 et 2002 optimisées pour constituer un élargisseur de faisceau, dimensionnées pour obtenir un faisceau d'environ 10 mm de diamètre.
- un diaphragme 2043 d'environ 8 mm de diamètre.
- des caméras CCD ayant 512x512 pixels utiles carrés avec un pas de 12 microns.
- des miroirs galvanométriques ayant un diamètre d'environ 10 mm.

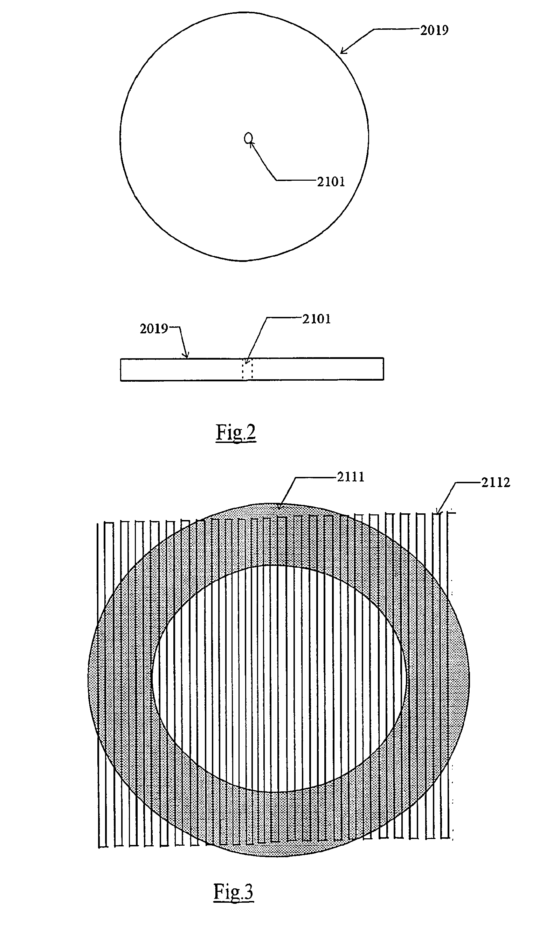

La lame demi onde percée 2019 est représentée plus en détail sur la Figure 2. Elle est constituée d'une lame demi-onde percée en son centre d'un trou 2101 qui peut avoir été réalisé à l'aide d'un laser de puissance ou par des moyens mécaniques. Le trou 2101 doit être sur l'axe optique. Son diamètre est supérieur au diamètre de la tache de diffraction formée par le faisceau sur la lame 2019, tout en étant suffisamment faible. Par exemple, dans l'exemple particulier de dimensionnement donné plus haut, son diamètre peut être d'environ 50 microns. Le trou 2101 peut être vide, toutefois il est préférable qu'il soit rempli d'un matériau d'indice proche de celui de la lame. Par exemple, la lame peut être prétaillée et prépercée, le trou peut être comblé par du verre d'indice approprié, et l'ensemble peut être poli conjointement. On peut également utiliser un ciment optique au lieu du verre. Le remplissage du trou par un matériau d'indice proche de celui de la lame permet d'éviter un décalage de phase important de la partie non diffractée de l'onde. Ceci est particulièrement utile si un laser émettant plusieurs longueurs d'onde simultanément est utilisé: en présence d'un décalage de phase important les images obtenues pour chaque longueur d'onde ne se superposeraient pas de manière constructive.

Le système est conçu de telle manière que l'objet observé soit éclairé par une onde plane dont la direction peut être modifiée à l'aide des miroirs galvanométriques 2003 et 2007, qui constituent donc un déflecteur de faisceau permettant de faire varier la direction du faisceau lumineux dans l'objet observé. Par ailleurs, le système est également conçu pour qu'en l'absence d'objet observé, le point de focalisation de la partie non diffractée du faisceau lumineux sur la lame demi onde percée 2019 soit un point fixe, situé sur l'axe optique, et coïncidant avec le trou 2101 pratiqué dans cette lame. En présence d'un objet observé, seule la partie du faisceau lumineux qui n'a pas été diffractée par l'objet observé passe par ce point fixe. Le trou pratiqué dans la lame constitue un point central du dispositif de filtrage permettant de modifier différemment la polarisation de la partie de l'onde qui traverse ce point (la partie non diffractée du faisceau lumineux) et la polarisation de la partie de l'onde qui traverse d'autres points (la partie diffractée du faisceau lumineux). Les miroirs galvanométriques 2003 et 2007 constituent à la fois:

-    un déflecteur de faisceau permettant de modifier la direction du faisceau lumineux éclairant l'objet observé,
-    un ensemble de miroirs mobiles permettant de modifier la direction du faisceau lumineux, après qu'il ait traversé l'objet observé, de manière à ce que la direction de la partie non diffractée du faisceau, après réflexion sur ces miroirs, soit indépendante de sa direction dans l'objet observé.

Ceci permet que le point de focalisation de la partie non diffractée du faisceau lumineux, dans le premier plan de focalisation ou est placée la lame 2019, soit fixe. Dans le cas présent, ces deux fonctions des miroirs galvanométriques sont remplies par des faces opposées de ces miroirs.

Pour qu'en l'absence d'objet observé l'onde passe bien par un point fixe de la lame 2019 un réglage de l'ensemble doit être effectué. Il s'agit essentiellement d'ajuster la distance focale d'une lentille, par exemple la lentille 2013, de manière à ce que la position du point d'impact de l'onde sur 2019 soit indépendante de la position des miroirs galvanométriques (dans la mesure où l'onde traverse effectivement le condenseur et l'objectif). A cet effet on peut par exemple utiliser comme lentille 2013 un doublet de lentilles achromatiques adjacentes, la distance entre ces lentilles étant réglable. On modifie alors la distance focale du doublet en ajustant la distance entre ses deux lentilles simples. Pour le réglage on peut remplacer 2019 par un capteur CCD de manière à pouvoir mesurer les déplacements du point d'impact sur ce capteur lorsque l'orientation des miroirs galvanométriques varie. Pour un réglage approprié de la distance focale de 2013, ce point d'impact est fixe.

Ce réglage ayant été effectué on met en place la lame percée 2019 de manière à ce que le trou 2101 coïncide avec le point d'impact du faisceau en l'absence d'objet observé. Pour régler la position de la lame percée on peut par exemple placer temporairement derrière cette lame un miroir et une lentille formant l'image de la lame sur un CCD auxiliaire, ainsi qu'un polariseur réglé en rotation de manière à atténuer fortement la partie de l'onde qui est polarisée dans le plan de la figure 1. Lorsque le trou coïncide avec le point d'impact du faisceau, l'intensité parvenant au CCD auxiliaire est maximale. Pour permettre ce réglage la lame 2019 doit être montée sur un positionneur 3 axes.

Ce réglage ayant été effectué, il est nécessaire de régler la position des capteurs CCD. Pour ce faire, on peut placer dans le plan d'espace situé entre les lentilles 2044 et 2045 un masque absorbant comportant quelques trous. Sur un écran d'ordinateur on superpose alors les images de ce masque acquises à l'aide des trois CCD et on règle la position des CCD pour amener ces images en coïncidence et pour que ces images soient nettes. Pour permettre ce réglage les capteurs CCD doivent être montés sur des positionneurs 3 axes.

Les trois caméras doivent être synchronisées entre elles et avec les miroirs galvanométriques de manière à ce que leurs temps d'intégration coïncident et correspondent également au temps pendant lequel l'onde d'éclairage balaye le plan focal objet du condenseur.

Une image élémentaire complexe est générée à partir des images réelles détectées sur les trois caméras CCD en effectuant le calcul suivant:

$$T[i,j] = \frac{1}{6}\left(2I_{2032}[i,j] - I_{2024}[i,j] - I_{2029}[i,j]\right) + \frac{j}{2\sqrt{3}}\left(I_{2024}[i,j] - I_{2029}[i,j]\right)$$

ou $I_X[i,j]$ représente l'intensité détectée au point de coordonnées $ij$ du CCD numéro $X$.

Une image de référence peut être obtenue en insérant, dans le plan d'espace situé entre les lentilles 2044 et 2045, une lame portant sur une zone réduite une légère surépaisseur, causant un décalage de phase par exemple égal à $\frac{\pi}{16}$. Cette lame peut typiquement être une lame de phase du type utilisé en contraste de phase, mais générant un décalage de phase plus faible. L'image de cette lame se forme sur les capteurs et l'image complexe correspondante

$T_{ref}[i, j]$ peut être obtenue. On calcule le rapport $M = \dfrac{T_{ref}[i_1, j_1]}{T_{ref}[i_0, j_0]}$ ou $(i_1 j_1)$ sont les coordonnées en pixels de l'image d'un point portant une surépaisseur, et $(i_0, j_0)$ sont les coordonnées de l'image d'un point ne portant pas de surépaisseur.

Ce rapport permet de normaliser l'image. On utilisera ensuite l'image élémentaire normalisée $C[i, j] = \dfrac{T[i, j]}{\tilde{j} M}$ ou $\tilde{j}$ désigne la racine complexe de l'unité. L'image élémentaire normalisée d'un point faiblement diffractant est réelle si ce point est uniquement absorbant et complexe si ce point est non absorbant et a un indice différent de celui du milieu dans lequel il se trouve.

Ces formules sont analogues à celles utilisées dans le brevet WO99/53355 ou dans proceedings of SPIE voL4164 p.122-133. La partie non diffractée de l'onde, qui traverse le trou 2101, est utilisée comme onde de référence et se voit appliquer des décalages de phase par rapport à la partie diffractée de l'onde, au moyen des lames tiers d'onde. Les polariseurs peuvent être orientés à 45 degrés du plan de la figure 1, mais il est possible en modifiant leur orientation de modifier l'intensité relative de l'onde de référence et de l'onde diffractée. Les trois polariseurs doivent cependant être orientés de la même manière, de manière à ce que l'onde de référence ait même amplitude sur les trois capteurs correspondants.

Ce microscope comporte plusieurs modes d'utilisation:

Mode 1) Génération de coupes de l'objet observé. Dans ce mode d'imagerie le masque 2046 et la lame filtrante 2047 ne sont pas utilisés. Pour générer des coupes de l'objet observé, les miroirs galvanométriques sont commandés de manière à ce que le point d'impact de l'onde d'éclairage dans le plan focal objet du condenseur se déplace de telle sorte que la puissance lumineuse reçue en un point du plan focal pendant le temps d'intégration de la caméra soit indépendante de la position de ce point à l'intérieur des limites définies par le diaphragme d'ouverture. Par exemple le point d'impact de l'onde d'éclairage dans le plan focal objet du condenseur peut parcourir une trajectoire du type représenté sur la Figure 3, la vitesse de déplacement du point étant à peu près constante dans les parties rectilignes de cette trajectoire, et la totalité de la trajectoire étant parcourue pendant le temps d'intégration de la caméra. Sur la Figure 3 on a représenté le diaphragme d'ouverture 2111 du condenseur et la trajectoire 2112 du point d'impact de l'onde d'éclairage. Une telle trajectoire peut typiquement être obtenue en utilisant un miroir galvanométrique résonnant et un second miroir galvanométrique plus lent, selon une méthode communément utilisée en microscopie confocale. L'image complexe $C[i,j]$ obtenue à partir des images réelles détectées sur les trois capteurs est une coupe de l'objet observé. Toutefois cette coupe est imparfaite et peut être améliorée en prenant plusieurs coupes successives, la position de l'objet observé suivant l'axe optique étant incrémentée d'une valeur constante entre chaque coupe. On indice ces coupes par un indice $k$. On obtient ainsi un tableau tridimensionnel complexe $H[i, j, k]$ dans lequel chaque élément du tableau correspond à un point de l'objet observé, avec $H[i, j, k] = C_k[i, j]$ ou $C_k[i, j]$ est l'image élémentaire normalisée obtenue pour la position caractérisée par l'indice $k$. Ce tableau peut être amélioré par une déconvolution permettant de compenser la « point spread function » ou réponse impulsionnelle du système. Le filtre de déconvolution peut être obtenu par des considérations théoriques ou par mesure à l'aide d'un objet ponctuel, par exemple une bille du type utilisé pour calibrer les microscopes confocaux. La trajectoire du point d'impact de l'onde dans le plan focal du condenseur peut être contrôlée à l'aide du capteur CCD 2041. La partie réelle de l'image obtenue correspond, pour des objets faiblement diffractants, à l'absorptivité. La partie imaginaire correspond, pour des objets faiblement diffractants, à l'indice de réfraction. Le filtre de déconvolution est le même que celui utilisé par exemple dans l'article « Reconstructing 3D light-microscopic images by digital image processing », par A.Erhardt&al. applied optics vol.24 no 2, 1985.

Mode 2) Utilisation en mode tomographique.

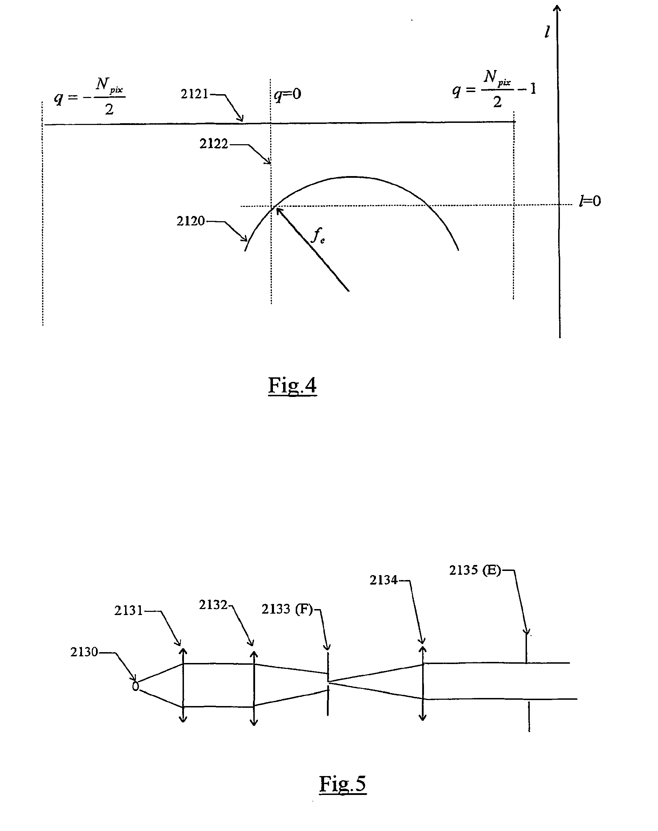

Dans ce mode d'imagerie le masque 2046 et la lame filtrante optionnelle 2047 ne sont pas utilisés. L'utilisation en mode tomographique consiste à utiliser une méthode du type décrit dans le brevet WO99/53355 et dans proceedings of SPIE vol.4164 p.122-133. Toutefois, il n'y a pas ici de décalage de phase aléatoire à compenser. De plus, les parties de représentation fréquentielle dont la superposition génère la représentation fréquentielle de l'objet observé sont obtenues d'une manière un peu différente. On utilise la transformée de Fourier $\tilde{C}[p,q] = \sum_{i,j} C[i,j] e^{j2\pi\left(\frac{ip+jq}{N_{pix}}\right)}$ de l'image élémentaire normalisée $C[i, j]$ obtenue pour une position donnée des miroirs galvanométriques. $N_{pix} \times N_{pix}$ est la dimension de la zone utile du capteur CCD, et les indices varient de $-\dfrac{N_{pix}}{2}$ à $\dfrac{N_{pix}}{2} - 1$. $\tilde{C}[p,q]$ est la projection sur un plan horizontal (suivant l'indice *l* déterminant la direction verticale d'une partie sphérique de la représentation fréquentielle tridimensionnelle de l'objet observé *F[p,q,l]*. La Figure 4 montre en coupe verticale suivant *q, l* la partie sphérique 2120 de la représentation *F[p,q, l]*, ainsi que le vecteur d'onde *f_e* de l'onde d'éclairage ramené à l'échelle de cette représentation, et le support bidimensionnel 2121 de $\tilde{C}[p, q]$. L'image détectée sur le CCD 2041 permet l'obtention du vecteur d'onde *f_e* et donc la détermination de la position de la portion de sphère 2120. Il est alors possible de projeter $\tilde{C}[p, q]$ sur cette portion de sphère, suivant la direction verticale 2122, pour obtenir une portion de la représentation fréquentielle de l'objet observé. La représentation tridimensionnelle *F[p,q, l]* est alors obtenue, comme dans le brevet WO99/53355 et dans proceedings of SPIE vol.4164 p.122-133, par superposition d'un ensemble de telles portions de sphères obtenues pour une série d'ondes d'éclairage différant entre elles par leur direction et obtenues par déplacement des miroirs galvanométriques. La représentation spatiale est obtenue par inversion de la transformation de Fourier.

Mode 3) obtention de projections d'un objet.

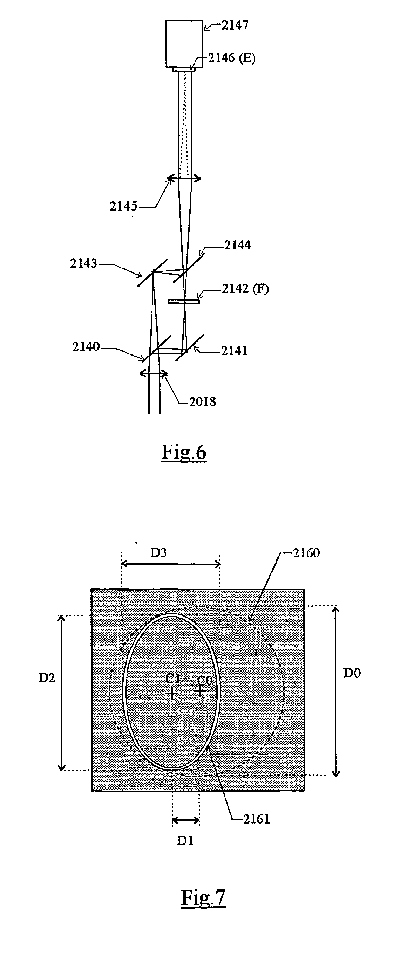

Des projections d'un objet observé peuvent être obtenues au moyen du second dispositif de filtrage, constitué par le masque 2046 opaque du type représenté sur la figure 7, comportant une ouverture 2161 en forme de bande elliptique, et placé dans un second plan de focalisation, dans lequel est focalisée la partie non diffractée du faisceau lumineux provenant de l'objet observé.

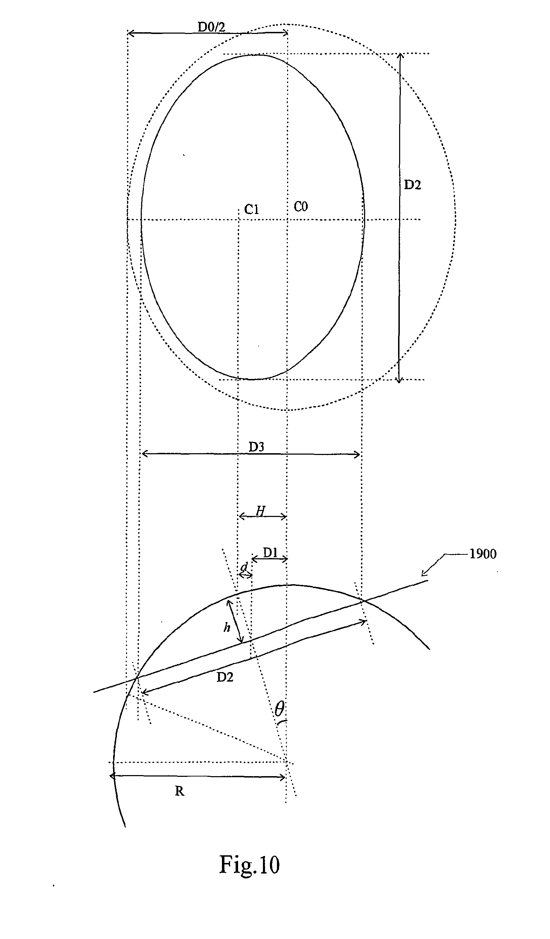

La Figure 10 précise les intermédiaires de calcul de cette bande elliptique et détaille le mode d'obtention des caractéristiques d'une ellipse limitant la bande elliptique 2161. Sur cette figure, le paramètre *R* vaut $R = nF_{obj}\dfrac{F_{2045}}{F_{2044}}$ ou *n* est l'indice de l'huile optique pour laquelle l'objectif est conçu. Le diamètre *D*0 du cercle 2160 limite la partie utile du plan, compte tenu de l'ouverture de l'objectif. Il vaut $D0 = 2ouv \cdot F_{obj}\dfrac{F_{2045}}{F_{2044}}$ ·L'angle entre la direction de projection et l'axe optique est θ. Les autres paramètres se déduisent de la figure:

Le rapport petit axe sur grand axe est $\dfrac{D3}{D2} = \cos(\theta)$. La position du centre C 1 de l'ellipse par rapport au centre optique CO s'obtient par:

*D*1 = *H-d*

*H = R* sinθ

*d = h* sin θ

$$\frac{D2}{2} = \sqrt{R^2 - (R - h)^2}$$

d'ou finalement:

$$D1 = \frac{n}{2ouv}D0\ \sin\theta\sqrt{1 - \left(\frac{D2}{D0}\frac{ouv}{n}\right)^2}$$

Par exemple, dans l'exemple particulier de dimensionnement donné plus haut, on a D0=5mm et une ellipse limitant un masque utilisable pour θ = 8 degrés a par exemple les caractéristiques suivantes, obtenues à partir des équations indiquées précédemment:

| paramètre | valeur |
|---|---|
| D1 | 0,30 |
| D2 | 4,25 |
| D3 | 4,21 |

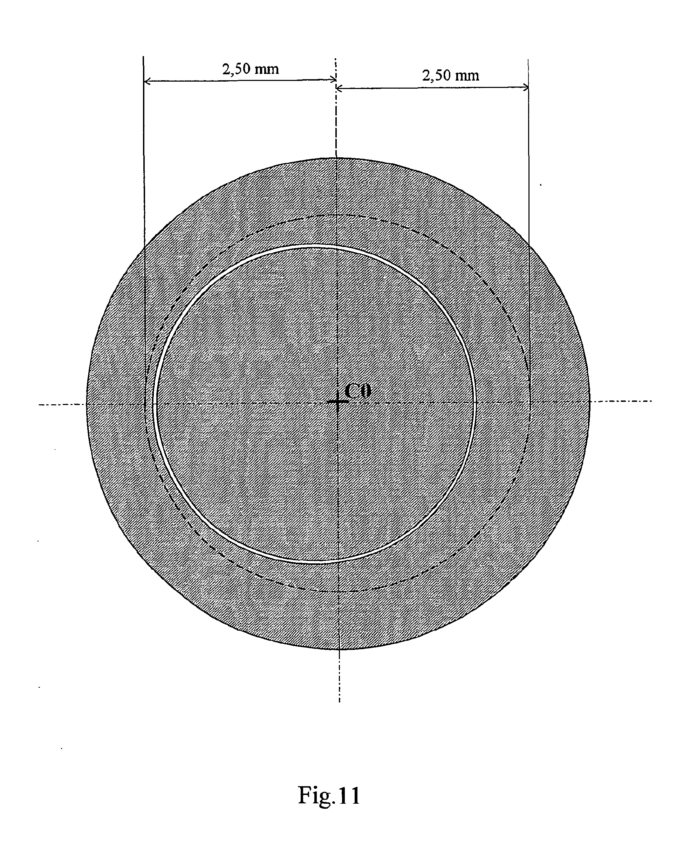

La largeur de la bande elliptique doit être supérieure au diamètre de la tache de diffraction formée dans le second plan de focalisation où se trouve le masque 2046. Dans le cas présent elle peut valoir par exemple 20 microns. Ce masque à bande elliptique a été représenté sur la figure 11 pour une largeur de la bande elliptique égale à 20 microns. Plus la largeur de la bande est élevée, plus la profondeur de champ de l'image obtenue est faible, et plus la luminosité est élevée. Il est donc préférable d'utiliser une largeur de bande faible dans la mesure ou cette largeur de bande reste compatible avec la luminosité nécessaire.

Si une projection suivant l'axe optique est recherchée, la bande est annulaire et centrée sur l'axe optique. Si une direction de projection plus inclinée est recherchée, l'ellipticité devient plus marquée et la bande est plus excentrée par rapport à l'axe optique.

Il est également possible de placer le masque à bande elliptique dans un autre plan de focalisation, par exemple un plan ou est usuellement placé la lame de phase dans un objectif à contraste de phase.

Les miroirs galvanométriques doivent alors être commandés de manière à ce que le point d'impact du faisceau d'éclairage sur ce masque parcoure la bande elliptique pendant le temps d'intégration des capteurs. L'image $C[i,j]$ obtenue est alors une projection suivant la direction verticale. Cette image peut être améliorée par une déconvolution bidimensionnelle dont les caractéristiques peuvent être obtenues soit par mesure de la réponse impulsionnelle soit par des considérations théoriques.

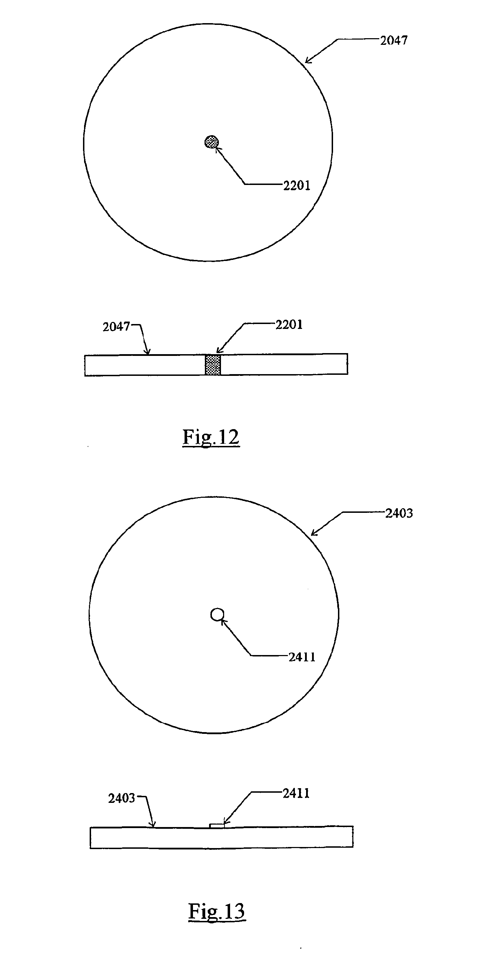

Dans ce mode d'imagerie la plus grande partie de l'onde diffractée est arrêtée par le masque 2046. Par contre la partie non diffractée de l'onde traverse entièrement le masque. En l'absence de précautions particulières, l'onde diffractée devient négligeable par rapport à l'onde non diffractée et peut donc difficilement être détectée. Pour remédier à ce défaut, il est nécessaire d'utiliser une lame filtrante 2047. Cette lame est représentée sur la figure 12. Elle est par exemple constituée d'une vitre transparente comportant en plus un élément absorbant 2201 qui peut être par exemple en verre ou en plastique teinté et avoir un diamètre, dans l'exemple particulier de dimensionnement donné plus haut, d'environ 50 microns. Cet élément absorbant 2201 doit être placé juste au-dessus du « trou » pratiqué dans la lame percée 2019. Il est également possible de supprimer la vitre 2047 et de couler directement un élément absorbant en plastique dans le trou 2101 pratiqué dans la lame percée. L'élément absorbant a pour fonction d'atténuer l'onde non diffractée pour faciliter la détection de l'onde diffractée. La lame filtrante 2047 peut également être utilisée pour effectuer un filtrage plus élaboré de l'image, et peut par exemple avoir une absorptivité décroissant de son centre 2201 vers ses bords, ce qui permet d'améliorer la résolution.

Au moyen de séparateurs de faisceau et d'interrupteurs rapides, par exemple à base de cristaux liquides ferroélectriques, on peut également séparer deux chemins sur lesquels deux masques différents peuvent être utilisés. En utilisant alternativement ces deux chemins on génère deux projections formant une image stéréoscopique. Le masque peut également être constitué d'un modulateur spatial à cristaux liquides, ce qui permet de modifier à volonté la direction d'observation.

Des modes d'utilisation différents, intermédiaires entre les modes génération de coupes, projection, et tomographique, peuvent être utilisés. En général le mode tomographique est celui qui permet la meilleure qualité d'image, et les deux autres modes sont utilisés pour l'observation en temps réel.

Des variations de ce mode de réalisation peuvent être utilisées. En particulier il est possible d'utiliser plusieurs lasers à des longueurs d'onde différentes, avec un système de commutation entre ces lasers ou un système de superposition des lasers, pour obtenir un effet de couleur.

Il est également possible d'utiliser une source de lumière décrite par la Figure 5. Sur cette figure de la lumière est produite au foyer 2130 d'une lampe à forte intensité, par exemple une lampe à vapeur de mercure. Cette lumière est collectée par un collecteur 2131 puis focalisée par une lentille 2132 vers un trou 2133. Si ce trou est suffisamment petit, il constitue une source ponctuelle. La lumière issue de ce trou microscopique traverse une lentille 2134 puis le diaphragme de champ 2135. Le plan focal objet de la lentille 2134 est sur le trou microscopique 2133. Le plan focal image de la lentille 2134 est sur le diaphragme 2135. La lumière issue du diaphragme de champ 2135 peut remplacer la lumière issue du laser et de son élargisseur de faisceau. L'avantage majeur de cette source de lumière est qu'elle est peu coûteuse et polychromatique, ce qui permet au moyen d'un filtre monochromateur de sélectionner diverses longueurs d'onde. Par contre, même en optimisant bien le système, la plus grande partie de la lumière issue de la source est perdue et l'intensité utile est donc assez réduite. Ce problème peut être résolu en élargissant simultanément le trou microscopique 2133 et le trou 2101 pratiqué dans la lame 2019. Toutefois ceci introduit des approximations qui peuvent diminuer la qualité de l'image. En effet, si la zone illuminée dans le plan focal objet du condenseur est trop importante:

- la largeur du trou microscopique 2101 doit être suffisante pour couvrir l'image de cette zone dans le plan de la lame 2019. La partie diffractée de l'onde traversant également cette zone, une partie non négligeable de cette onde diffractée sera modifiée de la même manière que l'onde non diffractée.
- la largeur de l'ellipse utilisée en mode "obtention de projections d'un objet" (profondeur de champ étendue) doit rester supérieure à la largeur de l'image de la zone illuminée dans le plan du masque 2046. Ceci limite la profondeur de champ pouvant être obtenue.
- de manière similaire, en mode "tomographique", l'extension suivant l'axe vertical de l'image tridimensionnelle pouvant être obtenue est limitée.

Si une telle source est utilisée, une caméra suffisamment sensible doit être utilisée. De plus, les lames demi-onde et tiers d'onde doivent être achromatiques, ce qui est aussi le cas lorsque plusieurs lasers sont utilisés.

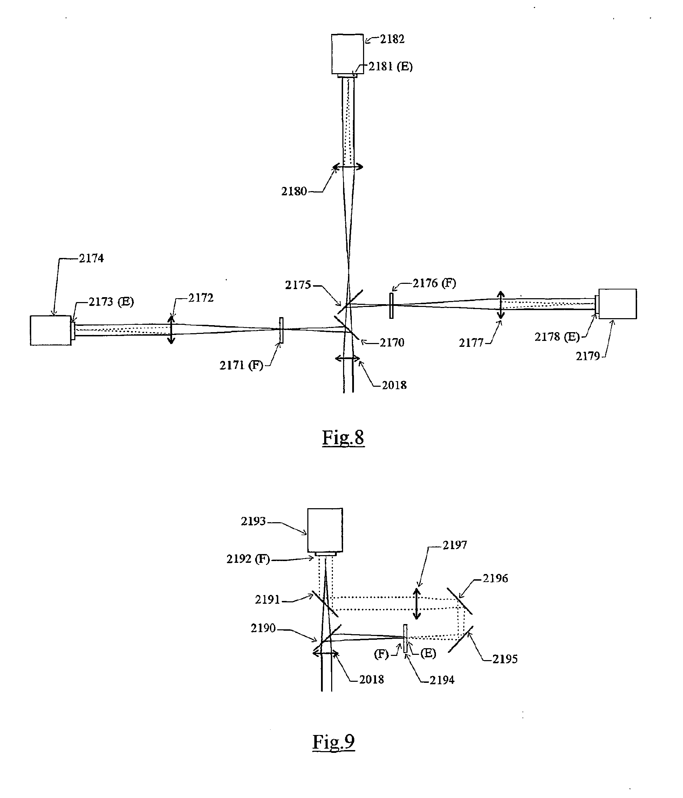

Il n'est pas indispensable d'utiliser des lames d'onde pour générer les décalages de phase. La Figure 8 représente un dispositif de détection pouvant se substituer à celui de la figure 1. Après traversée de la lentille 2018 l'onde est divisée en trois par les séparateurs de faisceau 2170 et 2175. La partie de l'onde qui est réfléchie par 2170 traverse alors une lame 2171 placée dans un plan de fréquence et portant une surépaisseur au point d'impact de la partie non diffractée de l'onde d'éclairage. La surépaisseur doit être telle qu'elle génère un décalage de phase de 120 degrés entre l'onde la traversant et l'onde qui ne la traverse pas. L'onde traverse ensuite la lentille 2172 dont le plan focal objet est sur la lame 2171 et parvient au CCD 2173 situé dans le plan focal image de 2171 et fixé à la caméra 2174. L'ensemble 2176, 2177, 2178, 2179 est équivalent à l'ensemble 2171, 2172, 2173, 2174 mais la surépaisseur génère un décalage de phase de 240 degrés. L'ensemble 2180, 2182,2183 est également équivalent mais ne comporte pas de lame avec surépaisseur (il peut éventuellement comporter une lame sans surépais seur).

Il est également possible d'utiliser une seule caméra. Dans ce cas, les images correspondant aux trois décalages de phase doivent être prises successivement. Les trois caméras sont par exemple remplacées par le dispositif de la figure 6. Sur cette figure, le faisceau issu de la lentille 2018 après avoir traversé la partie du dispositif de la Figure 1 qui se trouve avant cette lentille, parvient à un séparateur de faisceau 2140. La partie du faisceau qui est réfléchie par 2140 est ensuite réfléchie par le miroir piézoélectrique 2141 et parvient au trou microscopique 2142 qui coïncide avec le point d'impact de l'onde en l'absence d'objet observé. La partie de l'onde qui traverse ce trou microscopique comprend essentiellement la partie non diffractée de l'onde et sera utilisée comme onde de référence. Elle traverse ensuite le séparateur de faisceau 2144.

La partie de l'onde qui traverse le séparateur de faisceau 2140 est réfléchie par le miroir 2143 et par le miroir semi-transparent 2144. Les deux ondes superposées traversent ensuite la lentille 2145 et parviennent au capteur CCD 2146 intégré à la caméra 2147.

L'orientation du miroir 2143 doit être réglée pour obtenir la teinte plate sur la caméra en l'absence d'objet observé.

Le mode de fonctionnement est similaire au précédent mais l'acquisition simultanée sur les trois caméras est remplacée par l'acquisition successive d'images correspondant à des décalages de phase de 0,120, 240 degrés. Les décalages de phase sont réalisés au moyen du miroir piézoélectrique 2141. Lors des trois acquisitions successives nécessaires à l'obtention d'une image complexe, les miroirs galvanométriques doivent être commandés exactement de la même manière.

Il est possible d'ajouter dans le plan de focalisation situé entre 2140 et 2143 une lame portant un point absorbant au point d'impact de la partie non diffractée de l'onde, afin de ne conserver sur ce chemin que l'onde diffractée.

Les caméras ne sont pas nécessairement dans un plan image. La Figure 9 montre un système de détection à une caméra placée dans un plan de fréquence. L'onde ayant traversé la lentille 2018 traverse les séparateurs de faisceau 2190 et 2191 avant de parvenir au CCD 2192 située dans un plan de fréquence pour cette onde. La partie de l'onde qui est réfléchie par le séparateur de faisceau 2190 traverse le trou microscopique 2194 qui coïncide avec le point d'impact fixe de la partie non diffractée de l'onde. La partie de l'onde qui a traversé 2194 constitue l'onde de référence et le trou microscopique 2194 peut être considéré comme étant dans un plan d'espace pour cette onde. L'onde issue de 2194 est réfléchie sur le miroir piézoélectrique 2195 et sur le miroir 2196. Elle traverse la lentille 2197, est réfléchie par le séparateur de faisceau 2191 et parvient au CCD 2192 fixé à la caméra 2193. Le mode d'utilisation est similaire à celui du dispositif décrit sur la Figure 6, les décalages de phase étant maintenant réalisés à l'aide du miroir piézoélectrique 2195. Mais la valeur complexe obtenue au pixel de coordonnées $ij$ représente maintenant $\tilde{C}[i, j]$ au lieu de $C[i, j]$ et une transformée de Fourier inverse doit donc être effectuée pour retrouver l'image de l'objet observé. Des systèmes de détection utilisant trois caméras dans des plans de fréquence et une séparation du front d'onde par polarisation peuvent également être conçus. Il est possible de rajouter un plan de fréquence intermédiaire avant la caméra, dans lequel on place une lame portant un point absorbant situé au point d'impact direct de l'onde non diffractée. Ceci permet d'éviter la saturation de la caméra en ce point.

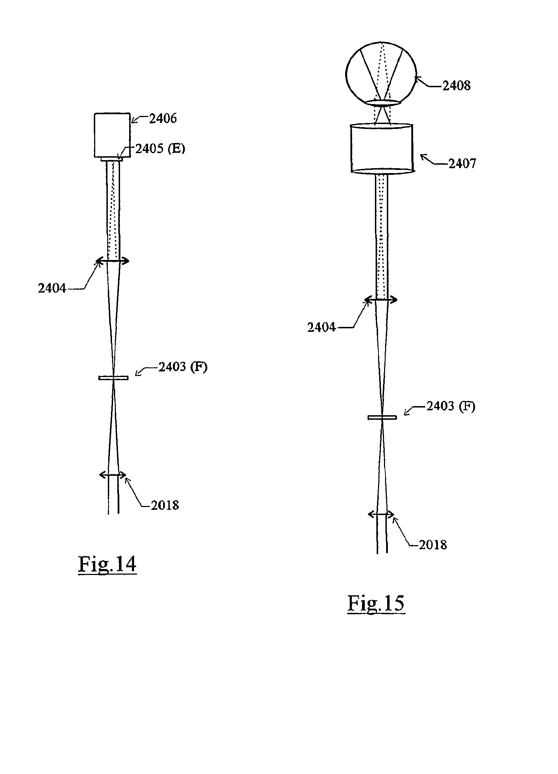

Il est également possible de supprimer les caméras et d'observer directement l'image à l'aide d'un oculaire, ou de n'utiliser qu'une caméra mais sur laquelle une seule image est acquise et retransmise à l'écran d'un ordinateur sans traitement préalable. Dans ce cas la partie du système de la figure 1 située après la lentille 2018 est remplacée par celle représentée sur la figure 14. L'onde issue de 2018 traverse une lame 2403 située dans le plan focal image de la lentille 2018, puis traverse la lentille 2404 dont le plan focal objet est sur la lame 2403, et parvient au capteur CCD 2405 fixé sur la caméra 2406. Le capteur et la caméra peuvent éventuellement être remplacés par un oculaire 2407 formant l'image sur la rétine de l'oeil 2408 comme indiqué par la figure 15. La lame 2403 est représentée sur la figure 13 dans le cas ou une image en contraste de phase est recherchée. Elle est constituée d'une vitre portant en son centre une surépaisseur 2411 générant par exemple un décalage de phase de $\frac{\pi}{2}$. La surépaisseur 2411 doit être placée au point d'impact fixe de la partie non diffractée de l'onde d'éclairage. Pour une image en fond clair la lame 2403 n'est pas indispensable, et dans le cas d'une image en mode « obtention de projections » la lame 2047 doit également être utilisée.

Les schémas des Figure 1,6,8,9,14,15 peuvent être utilement complétés par des filtres neutres, éventuellement réglables, permettant d'ajuster l'intensité lumineuse dans les différentes parties du dispositif.

**Second mode de réalisation (mode préféré)**

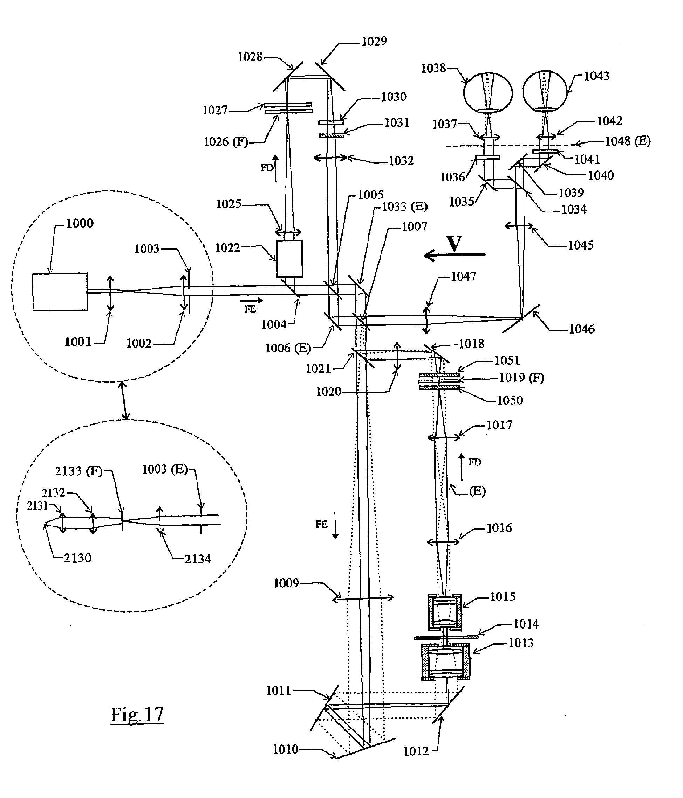

Un second mode de réalisation est représenté sur la figure 17. Il diffère du premier mode de réalisation par le fait que l'onde ayant traversé le premier dispositif de filtrage est ensuite à nouveau redirigée par les miroirs galvanométriques. Cette solution a pour avantage que:

- il n'est pas indispensable de placer les miroirs galvanométriques exactement dans des plans d'espace,
- le système est moins sensible aux dérives de position à long terme de ces miroirs
- la partie non diffractée du faisceau d'éclairage a une direction variable en sortie du système, ce qui permet une observation directe sans le danger lié à l'utilisation de lumière cohérente.
- l'effet de speckle, dû aux réflexions parasites dans la partie du système ou le faisceau a une direction constante, est réduit.

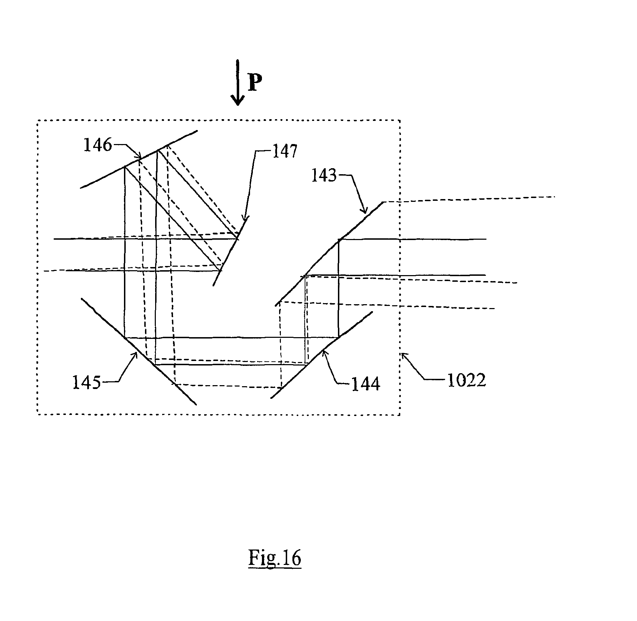

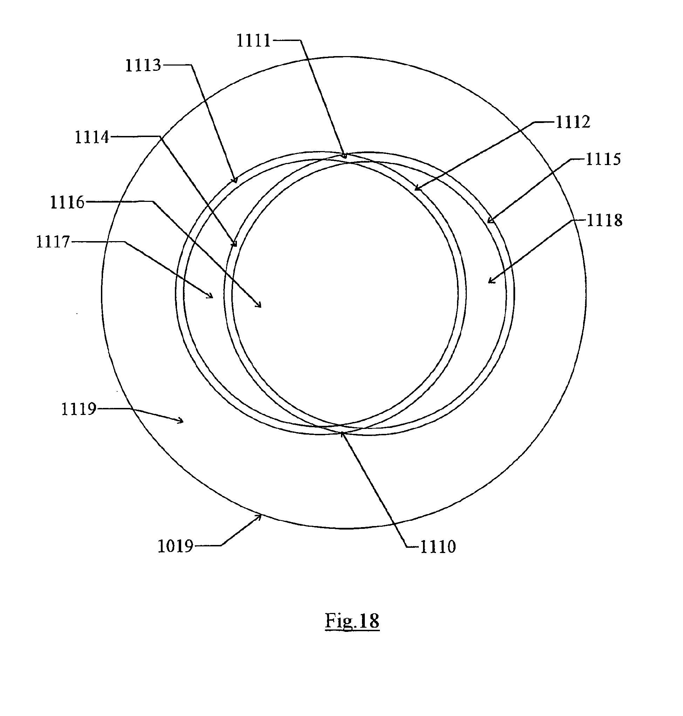

Le faisceau polarisé linéairement issu du laser 1000 traverse l'élargisseur de faisceau constitué des lentilles 1001 et 1002, puis le diaphragme 1003. Il traverse le séparateur de faisceau polarisant 1004, est réfléchi par le miroir galvanométrique 1005, par le miroir 1006 et par le miroir galvanométrique 1007. Les miroirs galvanométriques 1005 et 1006 constituent un déflecteur de faisceau (deuxième ensemble de miroirs mobiles) permettant de faire varier la direction du faisceau lumineux dans l'objet observé. Le faisceau traverse ensuite le séparateur de faisceau polarisant 1021, puis la lentille 1009. Il est réfléchi par les miroirs 1010 et 1011, puis par le miroir 1012. Il traverse le condenseur 1013, l'objet observé 1014, l'objectif 1015, la lentille de tube 1016, la lentille 1017. Il traverse le polariseur 1050 qui sélectionne uniquement la direction de polarisation principale (direction de polarisation de la partie non diffractée de l'onde) de manière à obtenir un faisceau parfaitement polarisé linéairement. Il traverse le second dispositif de filtrage, constitué par le rotateur de polarisation 1019 dont les électrodes sont représentées sur la figure 18 et qui permet de laisser passer au choix l'ensemble du faisceau ou le faisceau traversant le plan de fréquence sur une ou plusieurs bandes elliptiques. Il traverse ensuite le polariseur 1051 orienté orthogonalement au polariseur 1050. Il est réfléchi par le miroir 1018 et traverse la lentille 1020. Il est ensuite réfléchi par le séparateur de faisceau polarisant 1021. Il est alors réfléchi par le miroir galvanométrique 1007, par le miroir 1006 et par le miroir galvanométrique 1005. Les miroirs galvanométriques 1006 et 1005 constituent, sur cette partie de la trajectoire du faisceau, un premier ensemble de miroirs mobiles tels qu'après réflexion sur ces miroirs, la direction du faisceau soit indépendante de sa direction dans l'objet observé. Le faisceau est ensuite réfléchi par le séparateur de faisceau polarisant 1004. Il est réfléchi successivement par les miroirs 143, 144, 145, 146, 147 constituant l'ensemble 1022 représenté par un bloc sur la figure 17, qui sont montrés sur la figure 16 en vue suivant la direction V indiquée sur la figure 1. L'ensemble 1022 sert à inverser l'angle du faisceau par rapport à un plan contenant l'axe optique et situé dans le plan de la figure 1. La direction P indiquée sur la figure 16 montre la direction d'observation suivant laquelle est réalisée la figure 17. Le faisceau traverse la lentille 1025, qui a pour fonction de focaliser, sur le premier plan de focalisation, la partie non diffractée du faisceau lumineux. La lame percée 1026 et la lame filtrante 1027 constituent le premier dispositif de filtrage, placé dans le premier plan de focalisation. Le faisceau ayant traversé ce premier dispositif de filtrage est réfléchi par les miroirs 1028 et 1029, traverse la lame retardatrice 1030, le polariseur orientable 1031, la lentille 1032. Il est réfléchi par la seconde face du miroir galvanométrique 1005, par le miroir 1033, par la seconde face du miroir galvanométrique 1007. Dans cette partie de la trajectoire du faisceau lumineux, les miroirs galvanométriques 1005 et 1006 constituent un troisième ensemble de miroirs mobiles et ont pour fonction:

- de faire varier la direction de la partie non diffractée du faisceau lumineux, afin de le rendre directement observable à l'oeil sans le danger lié à l'observation d'un faisceau laser focalisé fixe.
- de compenser le déplacement du plan image causé par la réflexion précédente sur les miroirs galvanométriques constituant le premier ensemble de miroirs mobiles, qui ne se trouvent pas chacun dans un plan image comme dans le premier mode de réalisation.

Le faisceau lumineux traverse ensuite la lentille 1047, est réfléchi par le miroir 1046, traverse la lentille 1045. Il est ensuite séparé en deux par le miroir semi-transparent 1034. Une partie du faisceau est réfléchie par les miroirs 1039,1040, traverse l'obturateur 1041 composé d'un rotateur de polarisation à cristaux liquides et d'un polariseur. Cette partie du faisceau traverse l'oculaire 1042 et parvient à l'oeil 1043. L'autre partie du faisceau est réfléchie par le miroir 1035, traverse l'obturateur 1036, l'oculaire 1037, et parvient à l'oeil 1038.

Le laser 1000 peut être un laser émettant plusieurs longueurs d'onde simultanément, ou une association de plusieurs lasers dont les sorties sont superposées par des miroirs dichroïques, de manière à obtenir une image en couleurs.

Le plan focal objet de la lentille 1009 est sur le miroir 1006. Le plan focal image de la lentille 1009 est confondu avec le plan focal objet du condenseur 1013. Le plan focal objet de la lentille 1016 est confondu avec le plan focal image de l'objectif 1015. Le plan focal image de la lentille 1016 est confondu avec le plan focal objet de la lentille 1017. Le rotateur de polarisation 1019 est dans le plan focal image de la lentille 1017 et dans le plan focal objet de la lentille 1020. Le plan focal image de la lentille 1020 est confondu avec le plan focal objet de la lentille 1009. Le plan focal objet de la lentille 1025 est confondu avec le plan focal image de la lentille 1020. La lame demi onde percée 1026 est dans le plan focal image de la lentille 1025. Le plan focal objet de la lentille 1032 est confondu avec le plan focal image de la lentille 1025. La distance entre 1033 et 1005 soit égale à la distance entre 1006 et 1005. Le plan focal image de la lentille 1032 est sur le miroir 1033. Le plan focal objet de la lentille 1047 est sur le miroir 1033. Le plan focal image de la lentille 1047 est confondu avec le plan focal objet de la lentille 1045. Le plan focal image de la lentille 1045 est le plan image 1048 observé à l'aide des oculaires 1042 et 1037.

Comme précédemment on note $F_N$ la distance focale de la lentille numéro $N$, $ouv$ l'ouverture de l'objectif et du condenseur, $F_{cond}$ la distance focale du condenseur, $F_{obj}$ la distance focale de l'objectif. Pour que les déflexions du faisceau sur les diverses parties de sa trajectoire se compensent effectivement les unes les autres, les relations suivantes doivent être vérifiées:

$$\frac{F_{cond}}{F_{1009}} \frac{F_{1016}}{F_{obj}} \frac{F_{1020}}{F_{1017}} = 1$$

$F_{1032}=F_{1025}$.

Les électrodes du rotateur de polarisation 1019 sont représentées sur la figure 18. Elles forment deux bandes elliptiques pratiquement annulaires, chacune étant du type représenté sur la figure 11. L'ensemble de ces deux bandes est composé des électrodes 1111 à 1115. Le reste de la surface du rotateur est composé des électrodes 1116 à 1119 qui sont toutes reliées au même potentiel électrique.

Pour obtenir une image en coupe les miroirs galvanométriques sont commandés de manière à ce que le point d'impact de la partie non diffractée de l'onde d'éclairage balaye la partie du rotateur de polarisation 1019 qui est accessible compte tenu de l'ouverture de l'objectif, ou de manière équivalente pour que le point d'impact de l'onde d'éclairage balaye l'ensemble du plan focal objet du condenseur 1013. L'ensemble des électrodes du rotateur sont alors commandées pour que la lumière puisse traverser le polariseur 1051. Les interrupteurs 1041 et 1036 sont ouverts.

Pour obtenir une image stéréoscopique, les électrodes du rotateur de polarisation 1019, les miroirs galvanométriques 1007 et 1005, et les obturateurs 1041 et 1036, doivent être commandés de manière synchrone. La formation d'une image stéréoscopique est composée d'une phase de formation d'image gauche, et d'une phase de formation d'image droite. Ces deux phases alternent suffisamment rapidement pour que l'oeil ne puisse pas les distinguer.

Lors de la phase de formation d'image gauche:

- l'obturateur 1041 est ouvert.
- l'obturateur 1036 est fermé.
- les électrodes 1110, 1111, 1112, 1113, sont commandées de manière à ce que la lumière qui les traverse ait sa polarisation modifiée et traverse le polariseur 1051.
- les autres électrodes du rotateur de polarisation 1019 sont commandées de manière à ne pas modifier la polarisation de la lumière les traversant, de sorte que cette lumière soit arrêtée par le polariseur 1051.
- Les miroirs galvanométriques 1005,1007 sont commandés pour que le point d'impact de l'onde d'éclairage ait une trajectoire elliptique, se déplaçant sur l'ellipse formée par les électrodes 1110, 1111, 1112, 1113.

Lors de la phase de formation d'image droite:

- l'obturateur 1041 est fermé.
- l'obturateur 1036 est ouvert.
- les électrodes 1110, 1111, 1114, 1115, sont commandées de manière à ce que la lumière qui les traverse ait sa polarisation modifiée et traverse le polariseur 1051.

- les autres électrodes du rotateur de polarisation 1019 sont commandées de manière à ne pas modifier la polarisation de la lumière les traversant, de sorte que cette lumière soit arrêtée par le polariseur 1051.
- Les miroirs galvanométriques 1005,1007 sont commandés pour que le point d'impact de l'onde d'éclairage ait une trajectoire elliptique, se déplaçant sur l'ellipse formée par les électrodes 1110, 1111, 1114, 1115.

Le polariseur 1051 n'est pas absolument indispensable dans la mesure ou le séparateur de faisceau polarisant 1021 suffit à sélectionner une polarisation appropriée.

La lame demi onde percée 1026 est du même type que la lame demi onde percée 2019 du mode de réalisation précédent. La lame filtrante 1027 est du même type que la lame filtrante 2047. La lame retardatrice 1030 peut éventuellement être remplacée par un ensemble à décalage de phase variable du type décrit dans: P.Hariharan, "Achromatic phase shilting for polarization interferometry", Journal of modern optics vol. 43 no 6 pp.1305-1306, 1996.

En faisant tourner le polariseur 1031 et la lame d'onde mobile de l'ensemble à décalage de phase variable remplaçant la lame retardatrice 1030, on peut passer continûment du fond clair classique au fond clair fortement contrasté et au contraste de phase. En échangeant la lame filtrante 1027 on peut modifier le type de filtrage appliqué et obtenir une image en fond noir.

Un système simplifié peut être obtenu en supprimant la lame 1026, la lame 1030 et le polariseur 1031. Dans ce cas, les modifications de la partie non diffractée du faisceau lumineux sont obtenues uniquement au moyen de la lame filtrante 1027, et ne peuvent être modifiées qu'en échangeant cette lame. Cette lame constitue alors seule le premier dispositif de filtrage. En modifiant l'absorbance du point central de cette lame on modifie le contraste de l'image obtenue. En modifiant son épaisseur, et donc le décalage de phase qu'il applique au faisceau lumineux, on obtient une image en contraste de phase.

Pour compenser la relative lenteur des miroirs galvanométriques, il est possible de compléter le système avec un déflecteur acousto-optique placé par exemple entre le laser 1000 et la lentille 1001. Ce déflecteur peut être utilisé pour défléchir rapidement le faisceau. La modification de la direction du faisceau dans l'objet observé est alors due en partie aux miroirs galvanométriques et en partie au déflecteur acousto-optique. La déflexion due au déflecteur acousto-optique doit rester très inférieure en amplitude à celle due aux miroirs galvanométriques, de sorte que le point d'impact de la partie non diffractée de l'onde sur la lame demi-onde percée se déplace dans une petite zone autour de sa position moyenne. Il suffit alors d'agrandir légèrement le trou de la lame percée pour que la partie non diffractée de l'onde le traverse quel que soit l'état du déflecteur acousto-optique. Si le déflecteur acousto-optique ne défléchit le faisceau que dans une direction, il est possible de donner au trou de la lame percée une forme allongée.

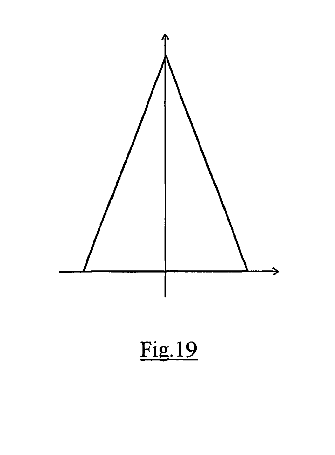

Lorsque les électrodes du rotateur de polarisation 1019 sont toutes passantes et en l'absence de lame filtrante 1027, la réponse fréquentielle du microscope ( transformée de Fourier de la réponse impulsionnelle ou "point spread function" bidimensionnelle, pour un point de l'objet observé situé dans le plan de focalisation ), a l'allure représentée sur la figure 19, ou le module de la fréquence spatiale bidimensionnelle est représenté en abscisses, et ou l'amplitude de la représentation fréquentielle est en ordonnée. Cette réponse fréquentielle est la même que pour un microscope classique en fond clair. L'amplitude diminue pour les fréquences spatiales élevées, ce qui se traduit par une diminution de la résolution telle qu'elle est perçue par l'observateur. Cette résolution peut être améliorée en corrigeant la réponse fréquentielle au moyen d'une lame filtrante 1027 appropriée, la réponse fréquentielle du système corrigé étant alors approximativement constante jusqu'à la fréquence spatiale maximale atteinte.

La représentation fréquentielle de la figure 19, ramenée au plan de Fourier dans lequel se trouve la lame filtrante 1027, est proportionnelle à $|r_{max} - r|$ avec $r_{max} = ouv \cdot F_{obj} \dfrac{F_{1017}}{F_{1016}} \dfrac{F_{1025}}{F_{1020}}$ , et ou $r$ est la distance à l'axe optique. Pour compenser cette réponse, on peut utiliser une lame filtrante ayant une transmissivité $T(r)$ dépendant de la distance $r$ à l'axe optique et valant:

- si $r \leq r_{lim}$ : $T(r) = \left| \dfrac{r_{max} - r_{lim}}{r_{max} - r} \right|^2$

- si $r \geq r_{lim}$ : $T(r) = 1$

ou $r_{lim}$ est une valeur limite comprise entre 0 et $r_{max}$. La résolution effective obtenue vaut alors à peu près, au sens de Rayleigh:

$$1{,}21 \cdot \frac{\lambda}{4 ouv} \frac{2 r_{max}}{r_{lim} + r_{max}}$$

Par exemple on peut utiliser $r_{lim}$ = 0,75$r_{max}$ et on a alors une limite de résolution de 0,57 fois la limite de résolution usuellement obtenue avec un microscope en fond clair (limite de Rayleigh). Dans ce cas la valeur minimale atteinte par $T(r)$ est $T(0)$ = 0,0625.

Si seule une augmentation de résolution en fond clair est recherchée, on peut supprimer la lame percée 1026, la lame d'onde 1030 et le polariseur 1031. Le premier dispositif de filtrage est alors constitué uniquement de la lame 1027.

Cette méthode d'augmentation de la résolution peut également être utilisée dans les autres modes de réalisation.

Comme indiqué sur la figure 17, un système peu coûteux peut être obtenu en remplaçant le laser et l'élargisseur de faisceau par le système représenté sur la figure 5 et déjà décrit dans le premier mode de réalisation. L'onde issue de la zone émissive 2130 d'une lampe à arc traverse la lentille collectrice 2130 puis est refocalisée par une lentille 2132 sur un trou 2133 situé dans un plan de fréquence. Ce trou est placé dans le plan focal objet de la lentille 2134, le diaphragme de champ 1003 étant placé dans le plan focal image de cette lentille. Pour que la luminosité soit maximale tout en restant compatible avec la méthode d'augmentation de la résolution décrite ici, le diamètre du trou 2133 de la figure 5 peut être par exemple:

$$D_{2133} = ouv \cdot F_{cond} \frac{F_{2134}}{F_{1009}} \frac{r_{lim} - r_{max}}{r_{max}}$$

Pour compenser la perte de luminosité qui, comparativement à un microscope classique, découle de la faible largeur du trou 2133 et de la faible valeur de $T(0)$, il est préférable d'utiliser une source lumineuse 2130 de très forte luminosité, par exemple une lampe à arc. Par exemple, on peut utiliser dans ce cas:

- un objectif planachromatique Nikon CFI60 d'ouverture numérique 1,25 formant l'image à l'infini et corrigé indépendamment de la lentille de tube, de distance focale 2 mm.
- un condenseur Nikon planachromatique d'ouverture 1,4 diaphragmé à 1,25, de distance focale 8 mm.
- une lentille 1009 constituée d'un doublet achromatique optimisé Melles Griot, de distance focale 800 mm.
- des lentilles 2134, 1016, 1017, 1020, 1025, 1032, 1047, 1045 toutes identiques à la lentille de tube utilisée sur les microscopes Nikon, de distance focale 200 mm.
- une lampe à arc au mercure.
- des miroirs galvanométriques ayant un diamètre d'environ 20 mm.
- un trou 2133 d'environ 0,625 mm de diamètre.
- une lame filtrante définie comme ci-dessus avec $r_{max}$ = 2,5 mm et $r_{lim}$ = 1,875 mm.

Toutefois ce dimensionnement nécessite des miroirs galvanométriques de grande taille pour ne pas diminuer le champ. Il est avantageux de modifier la distance focale des lentilles de la manière suivante:

- Les lentilles 1020, 1025, 1032, 1047, 2134 ont une distance focale de 50 mm.
- la lentille 1009 a une distance focale de 200 mm.

les autres lentilles étant comme précédemment. Cette solution permet d'utiliser des miro irs galvanométriques plus petits (environ 6 mm) et plus rapides, sans diminuer la taille du champ. Toutefois, les lentilles de distance focale 50 mm sont plus difficiles à optimiser en évitant les aberrations.

Dans la configuration indiquée la position de la lentille 1032 et du miroir 1033 doivent être réglés avec suffisamment de précision pour que le plan image soit fixe après réflexion sur les miroirs galvanométriques. Ceci peut être légèrement simplifié en utilisant un miroir galvanométrique unique mobile autour de deux axes, l'autre miroir galvanométrique étant remplacé par un miroir fixe. Dans ce cas le réglage de position du miroir 1033 devient inutile.

Un changement d'objectif dans le dispositif de la figure 17 nécessite des modifications dans le reste du système optique, qui rendent plus coûteux un système adapté à une série d'objectifs différents, dans lequel diverses lentilles doivent être échangées en même temps que l'objectif. Toutefois l'augmentation de résolution rendue possible par la présente invention est surtout utile avec des objectifs de résolution élevée. Pour limiter le coût et dans le cas ou l'objectif essentiel du dispositif est une augmentation de résolution en fond clair, il est avantageux de combiner la présente méthode, utilisée par exemple avec l'objectif x100 à huile ou à sec, avec une méthode de microscopie en fond clair classique utilisée avec les autres objectifs. Ceci peut être réalisé en dimensionnant le système pour l'objectif x 100, et en utilisant avec cet objectif la méthode décrite, qui implique une commande appropriée des miroirs galvanométriques permettant le balayage du plan focal objet du condenseur par le faisceau d'éclairage Avec les autres objectifs, on remplace le trou 2133 par un diaphragme d'ouverture suffisamment ouvert, on utilise une position fixe des miroirs galvanométriques, on supprime les lames 1026,1027,1030 et le polariseur 1031, et on commande le rotateur de polarisation de manière à le rendre entièrement passant, ce qui permet d'obtenir une image en fond clair classique. Il est également possible, mais plus coûteux, d'utiliser un chemin optique partiellement distinct pour le fond clair classique et pour le système avec augmentation de résolution.

### Applications industrielles:

Ce microscope peut remplacer les microscopes en fond clair, contraste de phase, ou DIC. Il offre une qualité d'image très supérieure, ainsi que la possibilité d'obtenir soit des coupes soit des projections de l'objet observé.

### Revendications

1. Microscope fonctionnant en transmission, comprenant :

   - un système optique comprenant une source d'éclairage (2000) et un condenseur (2011) et adapté pour éclairer un objet observé (2040) à l'aide d'un faisceau lumineux parallèle,
   - un déflecteur du faisceau d'illumination adapté pour faire varier la direction du faisceau lumineux dans l'objet observé,
   - un objectif de microscope (2012) collectant le faisceau lumineux après qu'il ait traversé l'objet observé,
   - au moins une lentille (2018) pour focaliser, en un premier point de focalisation d'un premier plan de focalisation, la partie non diffractée par l'objet observé du faisceau lumineux ayant traversé l'objet observé et l'objectif de microscope,

   **caractérisé par le fait qu'**il comporte :

   - un premier dispositif de filtrage (2019,2047) placé dans le premier plan de focalisation, pour appliquer une différence de phase et/ou d'atténuation et/ou de polarisation dans le premier plan de focalisation, entre d'une part la partie non diffractée du faisceau lumineux qui traverse le premier point de focalisation, et d'autre part la partie diffractée du faisceau lumineux qui ne traverse pas le premier point de focalisation,
   - au moins un premier miroir mobile (2007,2003) placé sur la trajectoire du faisceau lumineux ayant traversé l'objet observé, entre l'objectif et le premier dispositif de filtrage, pour modifier la direction du faisceau lumineux, pour que la direction du faisceau lumineux, après réflexion sur le premier miroir mobile, soit indépendante de la direction du faisceau lumineux dans l'objet observé, et pour que le premier point de focalisation soit fixe.

2. Microscope suivant la revendication 1, dans lequel le premier dispositif de filtrage (2019,2047) est placé dans un plan conjugué au plan focal image de l'objectif de microscope (2012).

3. Microscope selon une des revendications 1 ou 2, dans lequel le déflecteur du faisceau d'illumination est constitué par au moins un second miroir mobile (2007,2003), solidaire dudit premier miroir mobile (2007,2003) ou confondu avec ledit premier miroir mobile (2007,2003).

4. Microscope selon une des revendications 1 à 3, dans lequel la différence de phase et/ou d'atténuation et/ou de polarisation est une différence de phase, pour obtenir une image en contraste de phase.

5. Dispositif selon la revendication 4, dans lequel le dispositif de filtrage comprend une surépaisseur (2411) réalisée sur une vitre en verre (2403), pour obtenir la différence de phase.

6. Dispositif selon une des revendications 1 à 3, dans lequel la différence de phase et/ou d'atténuation et/ou de polarisation est une différence d'atténuation, pour obtenir une image à contraste amélioré.

7. Dispositif selon la revendication 6 dans lequel le dispositif de filtrage comporte un matériau absorbant (2201) inclus dans le dispositif de filtrage (2047), pour obtenir la différence d'atténuation.

**8.** Microscope selon une des revendications 1 à 3, dans lequel la différence de phase et/ou d'atténuation et/ou de polarisation est une différence de polarisation.

**9.** Microscope selon la revendication 8, dans lequel le dispositif de filtrage comporte une lame retardatrice (2019) percée d'un trou (2101), pour obtenir la différence de polarisation.

**10.** Microscope selon une des revendications 8 ou 9, comprenant au moins un polariseur (2023, 2028,2031) traversé par le faisceau ayant traversé le premier dispositif de filtrage, pour faire interférer la partie du faisceau lumineux qui a traversé le point central, avec la partie du faisceau lumineux qui a traversé le reste du dispositif de filtrage.

**11.** Microscope selon la revendication 10, comprenant au moins une lame retardatrice (2022,2027) placée sur la trajectoire du faisceau lumineux entre le premier dispositif de filtrage et le polariseur, pour modifier l'écart de phase entre le faisceau ayant traversé le point central et le faisceau ayant traversé le reste du dispositif de filtrage.

**12.** Microscope selon une des revendications 10 ou 11, comprenant:

- au moins trois capteurs (2024, 2029, 2032) sur lesquels interfèrent, d'une part, la partie du faisceau lumineux qui a été diffractée par l'objet observé, et d'autre part la partie du faisceau lumineux qui n'a pas été diffractée par l'objet observé,
- des moyens (2022) pour appliquer un premier décalage de phase entre, d'une part, la partie du faisceau lumineux qui a été diffractée par l'objet observé et qui parvient à un premier capteur (2024), et, d'autre part, la partie du faisceau lumineux qui n'a pas été diffractée par l'objet observé et qui parvient à ce premier capteur,
- des moyens (2027) pour appliquer un second décalage de phase, différent du premier décalage de phase, entre d'une part, la partie du faisceau lumineux qui a été diffractée par l'objet observé et qui parvient à un second capteur (2029), et, d'autre part, la partie du faisceau lumineux qui n'a pas été diffractée par l'objet observé et qui parvient à ce second capteur.

pour produire au moins trois figures d'interférence permettant le calcul d'une image complexe dépendant linéairement des caractéristiques de l'objet observé.

**13.** Microscope selon une des revendications 10 ou 11, comprenant des moyens pour modifier l'orientation du polariseur et/ou de la lame retardatrice, pour faire varier le contraste d'une image.

**14.** Microscope selon une des revendications 1 à 13, dans lequel la transmissivité du premier dispositif de filtrage (2047) dépend de la distance à l'axe optique, et est une fonction croissante de la distance à l'axe optique, pour améliorer la résolution et/ou le contraste.

**15.** Microscope selon une des revendications 1 à 14, comprenant au moins un troisième miroir mobile (1005,1007) pour modifier la direction du faisceau lumineux après qu'il ait été réfléchi sur le premier miroir mobile.

**16.** Microscope selon la revendication 15, dans lequel le troisième miroir mobile (1005,1007) est solidaire du premier miroir mobile (1007,1005) ou est confondu avec le premier miroir mobile.

**17.** Microscope selon une des revendications 1 à 16, comprenant au moins un second dispositif de filtrage (2046,1019)

- placé dans un second plan de focalisation du faisceau lumineux, atteint par ledit faisceau lumineux après traversée de l'objectif de microscope et avant réflexion par ledit premier miroir mobile,
- et permettant d'appliquer une modification de phase et/ou d'atténuation et/ou de polarisation variable dans le second plan de focalisation,

**18.** Microscope selon la revendication 17, dans lequel le second dispositif de filtrage (2160) laisse passer la lumière atteignant une bande elliptique (2161) et arrête la lumière n'atteignant pas cette bande elliptique, pour produire une image à profondeur de champ augmentée.

**19.** Microscope selon la revendication 18, dans lequel le second dispositif de filtrage (1019) comporte des moyens pour laisser passer alternativement la lumière atteignant l'une ou l'autre de deux bandes elliptiques distinctes, pour produire alternativement deux images formant une image stéréoscopique.

**Claims**

1. Microscope functioning in transmission, comprising:

- an optical system comprising a lighting source (2000) and a condenser (2011) adapted to light an observed object (2040) using a parallel light beam,
- a deflector of the illuminating beam adapted to vary the direction of the light beam in the observed object,
- a microscope objective (2012) collecting the light beam after it has passed through the observed object,
- at least one lens (2018) to focus, at a first focusing point of a first focusing plane, the part not diffracted by the observed object of the light beam having passed through the observed object and the microscope objective,

**characterized by** the fact that it comprises:

- a first filtering device (2019, 2047) placed in the first focusing plane, to apply a difference of phase and/or attenuation and/or of polarization within the first focal plane, between on the one hand the non diffracted part of the light beam, which passes through the first focusing point, and on the other hand, the diffracted part of the light beam which does not pass through the first focusing point,
- at least one first mobile mirror (2007, 2003) placed on the path of the light beam having passed through the observed object, between the objective and the first spatial filtering device, to modify the direction of the light beam, so that the direction of the light beam, after reflection on the first mobile mirror, is independent of the direction of the light beam in the observed object, and so that the first focusing point is fixed.

2. Microscope according to claim 1, wherein the first filtering device (2019,2047) is placed in a plane conjugate to the image focal plane of the microscope objective (2012),

3. Microscope according to one of claims 1 or 2, wherein the beam deflector comprises at least one second mobile mirror (2007,2003) fixed to said first mobile mirror (2007,2003) or forming part of said first mobile mirror (2007,2003).

4. Microscope according to one of claims 1 to 3, wherein the difference of phase and/or attenuation and/or of polarization is a phase shift, to obtain a phase contrast image.

5. Device according to claim 4, wherein the filtering device comprises an extra thickness (2411) added on a glass window (2403) to obtain the phase shift.

6. Device according to one of claims 1 to 3, wherein the difference of phase and/or attenuation and/or of polarization is a difference of attenuation, to improve the contrast of the image.

7. Microscope according to claim 6, wherein the filtering device comprises an absorbent material (2201) included in the filtering device (2047), to obtain the difference of attenuation.

8. Microscope according to one of claims 1 to 3, wherein the difference of phase and/or attenuation and/or polarization is a difference of polarization.

9. Microscope according to claim 8, wherein the filtering device comprises a retardation plate (2019) with a hole (2101) in it, to obtain the difference of polarization.

10. Microscope according to one of claims 8 or 9, comprising at least one polarizer (2023, 2028, 2031) traversed by the beam having passed through the first filtering device, to make the part of the light beam which has passed through the central point interfere with the part of the light beam which has passed through the remainder of the filtering device.

11. Microscope according to claim 10, comprising at least one retardation plate (2022, 2027) placed on the path of the light beam between the first filtering device and the polarizer, to modify the phase shift between the beam having passed through the central point and the beam having passed through the remainder of the filtering device.

12. Microscope according to one of claims 10 or 11, comprising:

- at least three sensors (2024, 2029, 2032) on which interfere, on the one hand, the part of the light beam that was diffracted by the observed object and, on the other hand, the part of the light beam that was not diffracted by the observed object,
- means (2022) to apply a first phase shift between, on the one hand, the part of the light beam that was diffracted by the observed object and that reaches a first sensor (2024) and, on the other hand, the part of the light beam that was not diffracted by the observed object and that reaches this first sensor,
- means (2027) to apply a second phase shift, different from the first phase shift, between on the one hand, the part of the light beam that was diffracted by the observed object and that reaches a second sensor (2029) and, on the other hand, the part of the light beam that was not diffracted by the observed object and that reaches this second sensor

to produce at least three interference patterns allowing a complex image depending linearly on the characteristics of the observed object to be calculated.

13. Microscope according to one of claims 10 or 11, comprising means to modify the orientation of the polarizer and/or of the retardation plate, to vary the contrast of the image.

14. Microscope according to one of claims 1 to 13, wherein transmissivity of the first filtering device (2047) depends on the distance to the optical axis, and is an increasing function of the distance to the optical axis, to improve resolution and/or contrast.

15. Microscope according to one of claims 1 to 14, including at least one third mobile mirror (1005,1007) to modify the direction of the light beam after it was reflected on the first mobile mirror.

16. Microscope according to claim 15, wherein the third mobile mirror (1005,1007) is fixed to the first mobile mirror (1007,1005) or is part of the first mobile mirror.

17. Microscope according to one of claims 1 to 16, including at least one second filtering device (2046,1019)

- placed in a second focusing plane of the light beam, reached by said light beam after having passed through the microscope objective and before reflection by said first mobile mirror,
- and allowing a difference of phase and/or attenuation and/or polarization to be applied which varies in the second focusing plane,

18. Microscope according to claim 17, wherein the second filtering device (2160) lets the light reaching an elliptic band (2161) pass and stops the light not reaching this elliptic band to produce an image with enhanced depth of field.

19. Microscope according to claim 18, wherein the second spatial filtering device (1019) includes means to let the light reaching one or the other of two distinct elliptic bands pass alternately, to produce alternately two images and thus form a stereoscopic image.

**Patentansprüche**

1. Transmissionsmikroskop, welches umfasst:

- ein optisches System, das eine Lichtquelle (2000) und einen Kondensor (2011) einschließt, und so eingestellt ist, dass es ein Beobachtungsobjekt (2040) mit Hilfe eines Bündels paralleler Lichtstrahlen ausleuchtet,
- eine Vorrichtung zur Ablenkung des Lichtstrahlenbündels, mit der sich die Richtung des Strahlenbündels im Beobachtungsobjekt variieren lässt,
- ein Mikroskopobjektiv (2012), das als Kollektor für das Lichtstrahlenbündel nach dessen Durchdringung des Beobachtungsobjekts dient,
- mindestens eine Linse (2018) zum Fokussieren in einem ersten Brennpunkt einer ersten Brennebene, wobei der nicht vom Beobachtungsobjekt gebeugte Teil des Lichtstrahlenbündels das Beobachtungsobjekt und das Mikroskopobjektiv durchlaufen hat,

und **dadurch gekennzeichnet ist, dass** es umfasst:

- eine erste Filtervorrichtung (2019,2047) in der ersten Brennebene, um in der ersten Brennebene für eine Phasen- und/oder Dämpfungs- und/oder Polarisationsdifferenz zwischen dem den ersten Brennpunkt durchlaufenden, nicht gebeugten Teil des Lichtstrahlenbündels einerseits und dem den ersten Brennpunkt nicht durchlaufenden, gebeugten Teil des Lichtstrahlenbündels andererseits zu sorgen,

- mindestens einen ersten drehbaren Spiegel (2007,2003) auf dem Weg des Lichtstrahlenbündels, welches das Beobachtungsobjekt durchlaufen hat, zwischen dem Objektiv und der ersten Filtervorrichtung, um die Richtung des Lichtstrahlenbündels so zu ändern, dass die Richtung des Lichtstrahlenbündels nach der Reflexion am ersten drehbaren Spiegel unabhängig von der Richtung des Lichtstrahlenbündels im Beobachtungsobjekt ist, und dass der erste Brennpunkt fest steht.

2. Mikroskop gemäß Patentanspruch 1, in dem die erste Filtervorrichtung (2019,2047) in einer mit der Bildbrennebene des Mikroskopobjektivs (2012) gepaarten Ebene platziert ist.

3. Mikroskop gemäß einem der Patentansprüche 1 oder 2, in dem die Vorrichtung zur Ablenkung des Lichtstrahlenbündels aus mindestens einem zweiten drehbaren Spiegel (2007,2003) besteht, der mit dem ersten drehbaren Spiegel (2007,2003) fest verbunden oder mit dem ersten drehbaren Spiegel (2007,2003) verschmolzen ist.

4. Mikroskop gemäß einem der Patentansprüche 1 bis 3, in dem die Phasen- und/oder Dämpfungs- und /oder Polarisationsdifferenz eine Phasendifferenz ist, um ein Bild mit Phasenkontrast zu erzielen.

5. Vorrichtung gemäß Patentanspruch 4, in der die Filtervorrichtung eine auf einer Glasscheibe (2403) aufgebrachte Überdicke (2411) aufweist, um die Phasendifferenz zu erzielen.

6. Vorrichtung gemäß einem der Patentansprüche 1 bis 3, in der die Phasen- und/oder Dämpfungs- und /oder Polarisationsdifferenz eine Dämpfungsdifferenz ist, um ein kontrastreicheres Bild zu erzielen.

7. Vorrichtung gemäß Patentanspruch 6, in der die Filtervorrichtung ein in der Filtervorrichtung (2047) eingeschlossenes absorbierendes Material (2201) enthält, um die Dämpfungsdifferenz zu erzielen.

8. Mikroskop gemäß einem der Patentansprüche 1 bis 3, in dem die Phasen- und/oder Dämpfungs- und /oder Polarisationsdifferenz eine Polarisationsdifferenz ist.

9. Mikroskop gemäß Patentanspruch 8, in dem die Filtervorrichtung ein mit einer Bohrung (2101) versehenes dünnes Verzögerungsplättchen (2019) enthält, um die Polarisationsdifferenz zu erzielen.

10. Mikroskop gemäß einem der Patentansprüche 8 oder 9, das mindestens ein Polarisationsfilter (2023, 2028,2031) umfasst, das von dem Lichtstrahl durchlaufen wird, der die erste Filtervorrichtung passiert hat, um denjenigen Teil des Lichtstrahlenbündels, der den Mittelpunkt durchlaufen hat, mit demjenigen Teil des Lichtstrahlenbündels, der den Rest der Filtervorrichtung durchlaufen hat, zu überlagern.

11. Mikroskop gemäß Patentanspruch 10, das mindestens ein Verzögerungsplättchen (2022, 2027) auf dem Weg des Lichtstrahlenbündels zwischen der ersten Filtervorrichtung und dem Polarisationsfilter umfasst, um die Phasendifferenz zwischen dem Strahlenbündel, das den Mittelpunkt durchlaufen hat, und dem Strahlenbündel, das den Rest der Filtervorrichtung durchlaufen hat, zu verändern.

12. Mikroskop gemäß einem der Patentansprüche 10 oder 11, welches umfasst:

- mindestens drei Sensoren (2024, 2029, 2032), an denen der vom Beobachtungsobjekt gebeugte Teil des Lichtstrahlenbündels einerseits und der nicht vom Beobachtungsobjekt gebeugte Teil des Lichtstrahlenbündels andererseits interferieren,
- Vorrichtungen (2022) zur Erzeugung einer ersten Phasenverschiebung zwischen dem vom Beobachtungsobjekt gebeugten und an einem ersten Sensor (2024) ankommenden Teil des Lichtstrahlenbündels einerseits und dem nicht vom Beobachtungsobjekt gebeugten und an diesem ersten Sensor ankommenden Teil des Lichtstrahlenbündels andererseits,
- Vorrichtungen (2027) zur Erzeugung einer von der ersten Phasenverschiebung verschiedenen zweiten Phasenverschiebung zwischen dem vom Beobachtungsobjekt gebeugten und an einem zweiten Sensor (2.029) ankommenden Teil des Lichtstrahlenbündels einerseits und dem nicht vom Beobachtungsobjekt gebeugten und an diesem zweiten Sensor ankommenden Teil des Lichtstrahlenbündels andererseits, um mindestens drei Interferenzfiguren zu erzeugen, mit denen sich ein komplexes, linear von den Charakteristika des Beobachtungsobjekts abhängiges Bild errechnen lässt.

13. Mikroskop gemäß einem der Patentansprüche 10 oder 11, das Vorrichtungen zur Änderung der Orientierung des Polarisationsfilters und/oder des Verzögerungsplättchens umfasst, um den Kontrast eines Bildes variieren zu können.

14. Mikroskop gemäß einem der Patentansprüche 1 bis 13, in dem die Transmissivität der ersten Filtervorrichtung (2047) vom Abstand zur optischen Achse abhängt und eine mit dem Abstand zur optischen Achse ansteigende Funktion bildet, um die Auflösung und/oder den Kontrast zu verbessern.

15. Mikroskop gemäß einem der Patentansprüche 1 bis 14, das mindestens einen dritten drehbaren Spiegel (1005,1007) umfasst, um die Richtung des Lichtstrahlenbündels zu ändern, nachdem er am ersten drehbaren Spiegel reflektiert wurde.

16. Mikroskop gemäß Patentanspruch 15, in dem der dritte drehbare Spiegel (1005,1007) mit dem ersten drehbaren Spiegel (1007,1005) fest verbunden oder mit dem ersten drehbaren Spiegel verschmolzen ist.

17. Mikroskop gemäß einem der Patentansprüche 1 bis 16, welches mindestens eine zweite Filtervorrichtung (2046,1019) umfasst:

   - die in einer zweiten Brennebene des Lichtstrahlenbündels liegt, die von dem Lichtstrahlenbündel nach Durchlaufen des Mikroskopobjektivs und vor Reflexion durch den ersten drehbaren Spiegel erreicht wird,
   - und mit der sich eine variable Phasen- und/oder Dämpfungs- und/oder Polarisationsänderung in der zweiten Brennebene vornehmen lässt,

18. Mikroskop gemäß Patentanspruch 17, in dem die zweite Filtervorrichtung (2160) das Licht passieren lässt, das einen elliptischen Streifen (2161) erreicht, und das Licht zurückhält, das diesen elliptischen Streifen nicht erreicht, um so ein Bild mit größerer Tiefenschärfe zu erzeugen.

19. Mikroskop gemäß Patentanspruch 18, in dem die zweite Filtervorrichtung (1019) Komponenten enthält, die das Licht, das den einen oder den anderen von zwei unterschiedlichen elliptischen Streifen erreicht, abwechselnd passieren lassen, um abwechselnd zwei Bilder zu erzeugen, die dann ein stereoskopisches Bild ergeben.

## Fig.1

2019

2101

Fig.2

2111

2112

Fig.3

$$q = -\frac{N_{pix}}{2}$$

2121

$q=0$

$$q = \frac{N_{pix}}{2} - 1$$

$l$

2122

$l=0$

2120

$f_e$

Fig.4

2135 (E)

2134

2133 (F)

2132

2131

2130

Fig.5

2147

2146 (E)

2145

2144

2143

2142 (F)

2140

2141

2018

**Fig.6**

D3

2160

D2

D0

C1   C0

2161

D1

**Fig.7**

Fig.8

Fig.9

Fig.10

Fig.11

Fig.12

Fig.13

Fig.14

Fig.15

Fig.16

Fig.17

Fig.18

Fig. 19